# EUROPEAN PATENT APPLICATION

(11) **EP 4 286 330 A1**
(43) Date of publication of application: **06.12.2023**
(21) Application number: 22746050.8
(22) Date of filing: 28.01.2022
(51) Int. Cl.: C01B 33/141, C04B 38/00, B01J 31/04

(54) **APPARATUS AND METHOD FOR PRODUCING SOL, GEL AND POROUS SILICA BODY**

(30) Priority: 29.01.2021 JP 2021013842
(71) Applicant: Mitsui Mining & Smelting Co., Ltd., Shinagawa-ku Tokyo 141-8584 (JP)
(72) Inventor: OSAKO Takao, Ageo-shi, Saitama 362-0021 (JP); KATO Kazuhiko, Ageo-shi, Saitama 362-0021 (JP); KOBAYASHI Yutaka, Ageo-shi, Saitama 362-0021 (JP)
(74) Representative: Novagraaf Technologies
(86) International application number: PCT/JP2022/003429
(87) International publication number: WO 2022/163831

(57) **Abstract**

An object of the present invention is to provide apparatuses and methods, in which solation of a mixed liquid can be allowed to progress under sufficiently controlled conditions with the mixed liquid being effectively cooled, to thereby industrially produce a homogeneous sol, and then sol-gel transition with a phase separation process can be induced, to produce a gel having a co-continuous structure of a skeleton phase and a solvent phase and to produce a silica porous body having macropores. According to one embodiment of the present invention, there is provided a sol producing apparatus (1) that produces a sol for use in production of a silica porous body having macropores, the sol producing apparatus (1) including a mixing section (11) that prepares a mixed liquid (M) containing a silica precursor, a catalyst and a macropore forming agent, a first feeding section (12) that feeds the silica precursor to the mixing section (11), a second feeding section (13A) that feeds the catalyst and the macropore forming agent in admixture with each other, to the mixing section (11), a discharging pipe (14) that discharges the mixed liquid (M) from the mixing section (11), and a cooling section (15) that cools the mixed liquid (M) flowing through the discharging pipe (14), to 35°C or less.

## Description

### FIELD OF THE INVENTION

The present invention relates to an apparatus and a method for producing a sol for use in production of a silica porous body having macropores, an apparatus and a method for producing a gel for use in production of a silica porous body having macropores, and an apparatus and a method for producing a silica porous body having macropores.

### BACKGROUND ART

A silica porous body having macropores (silica monolith) is widely used for separation columns for chromatography, enzyme carriers, catalyst carriers, adsorbents, and the like.

A silica porous body having macropores has a co-continuous structure of a skeleton composed of polysiloxane, and macropores.

A silica porous body having macropores can be produced by, for example, the following method. First, a mixed liquid containing reagents such as a silica precursor, a catalyst, and a macropore forming agent is prepared, and a hydrolysis reaction and a polycondensation reaction are allowed to progress. When the hydrolysis reaction and the polycondensation reaction progress, nanometer-sized primary particles of a siloxane oligomer are formed and these primary particles are aggregated to form secondary particles. Thus, a sol is formed. When the hydrolysis reaction and the polycondensation reaction further progress, a siloxane polymer is formed and sol-gel transition with a phase separation process (typically spinodal decomposition) is induced. A gel (wet gel) having a co-continuous structure of a skeleton phase and a solvent phase is formed by such sol-gel transition with a phase separation process. Such a gel having a co-continuous structure of a skeleton phase and a solvent phase can be, if necessary, dried, and then fired to thereby produce a silica porous body having macropores. A skeleton of the silica porous body is formed from the skeleton phase of the gel, and macropores of the silica porous body are formed from the solvent phase of the gel.

However, the hydrolysis reaction is exothermic, and thus a problem is that such sol-gel transition locally progresses without any phase separation process, before formation of a homogeneous sol, thereby causing non-uniform or insufficient formation of the co-continuous structure of a skeleton phase and a solvent phase in the gel and thus non-uniform or insufficient formation of macropores in the silica porous body.

In view of such a problem, Patent Document 1 proposes a method involving adding ice to a mixed liquid containing various reagents such as a silica precursor, a catalyst, and a macropore forming agent, to thereby suppress a temperature rise of the mixed liquid in a sol preparing step.

### CITATION LIST

### PATENT DOCUMENTS

Patent Document 1: Japanese Patent Laid-Open No. 2012-096960

### SUMMARY OF THE INVENTION

In a case where a sol is industrially produced by using the method described in Patent Document 1, there are needs for an increase in size of a container in which a mixed liquid is contained and thus an increase in amount of the mixed liquid, or for an increase in number of containers in which a mixed liquid is contained and thus an increase in amount of the mixed liquid.

However, an increase in container size and thus an increase in amount of the mixed liquid make it difficult to effectively suppress a temperature rise of the mixed liquid by addition of ice to the mixed liquid. A large amount of ice is necessary for suppression of a temperature rise of the mixed liquid. Addition of a large amount of ice to the mixed liquid causes a change in reagent concentration in the mixed liquid, thereby making it difficult to control the reagent concentration in the mixed liquid.

On the other hand, an increase in number of containers and thus an increase in amount of the mixed liquid cause a variation in reagent concentration in the mixed liquid, among containers, thereby making it difficult to control the reagent concentration in the mixed liquid.

Accordingly, it is difficult for the method described in Patent Document 1 to allow solation (hydrolysis reaction and polycondensation reaction) of a mixed liquid to progress under sufficiently controlled conditions with the mixed liquid being effectively cooled, to thereby industrially produce a homogeneous sol, and thus induce sol-gel transition with a phase separation process (typically spinodal decomposition), to thereby produce a gel having a co-continuous structure of a skeleton phase and a solvent phase and produce a silica porous body having macropores.

Therefore, an object of the present invention is to provide a sol producing apparatus and a sol producing method, in which solation of a mixed liquid can be allowed to progress under sufficiently controlled conditions with the mixed liquid being effectively cooled, to thereby industrially produce a homogeneous sol.

In addition, an object of the present invention is to provide a gel producing apparatus or a gel producing method for producing a gel having a co-continuous structure of a skeleton phase and a solvent phase by using a sol produced by the sol producing apparatus or the sol producing method and inducing sol-gel transition with a phase separation process.

Furthermore, an object of the present invention is to provide a silica porous body producing apparatus and a silica porous body producing method for producing a silica porous body having macropores by using a gel produced by the gel producing apparatus or gel producing method.

In order to solve the above problems, the present invention provides the following apparatuses and methods.
[1] A sol producing apparatus that produces a sol for use in production of a silica porous body having macropores, the sol producing apparatus including:
   a mixing section that prepares a mixed liquid containing a silica precursor, a catalyst and a macropore forming agent;
   a first feeding section that feeds the silica precursor to the mixing section;
   a second feeding section that feeds the catalyst and the macropore forming agent in admixture with or separately from each other, to the mixing section;
   a discharging pipe that discharges the mixed liquid from the mixing section; and
   a cooling section that cools the mixed liquid flowing through the discharging pipe, to 35°C or less.
[2] A gel producing apparatus that produces a gel for use in production of a silica porous body having macropores, the gel producing apparatus including a sol producing section and a gel producing section, wherein:
   the sol producing section includes:
      a mixing section that prepares a mixed liquid containing a silica precursor, a catalyst and a macropore forming agent;
      a first feeding section that feeds the silica precursor to the mixing section;
      a second feeding section that feeds the catalyst and the macropore forming agent in admixture with or separately from each other, to the mixing section;
      a discharging pipe that discharges the mixed liquid from the mixing section; and
      a cooling section that cools the mixed liquid flowing through the discharging pipe, to 35°C or less; and
   the gel producing section includes a heating section that heats a sol produced in the sol producing section, to a gelation temperature.
[3] A silica porous body producing apparatus that produces a silica porous body having macropores, the silica porous body producing apparatus including a sol producing section, a gel producing section, and a silica porous body producing section, wherein:
   the sol producing section includes:
      a mixing section that prepares a mixed liquid containing a silica precursor, a catalyst and a macropore forming agent;
      a first feeding section that feeds the silica precursor to the mixing section;
      a second feeding section that feeds the catalyst and the macropore forming agent in admixture with or separately from each other, to the mixing section;
      a discharging pipe that discharges the mixed liquid from the mixing section; and
      a cooling section that cools the mixed liquid flowing through the discharging pipe, to 35°C or less;
   the gel producing section includes a heating section that heats a sol produced in the sol producing section, to a gelation temperature; and
   the silica porous body producing section includes a firing section that fires a gel produced in the gel producing section.
[4] A method for producing a sol for use in production of a silica porous body having macropores, the method including the following steps of:
   (1A) feeding a silica precursor to a mixing section;
   (1B) feeding a catalyst and a macropore forming agent in admixture with or separately from each other, to the mixing section;
   (1C) preparing a mixed liquid containing the silica precursor, the catalyst and the macropore forming agent, in the mixing section; and
   (1D) cooling the mixed liquid flowing through a discharging pipe connected to the mixing section, to 35°C or less, with the mixed liquid being discharged from the mixing section through the discharging pipe.
[5] A method for producing a gel for use in production of a silica porous body having macropores, the method including the following steps of:
   (2A) producing a sol by the method according to [4]; and
   (2B) heating the sol produced in step 2A to a gelation temperature, to thereby produce the gel.
[6] A method for producing a silica porous body having macropores, the method including the following steps of:
   (3A) producing a sol by the method according to [4];
   (3B) heating the sol produced in step 3A to a gelation temperature, to thereby produce a gel; and
   (3C) firing the gel produced in step 3B, to thereby produce the silica porous body.

According to the present invention, there are provided a sol producing apparatus and a sol producing method, in which solation of a mixed liquid can be allowed to progress under sufficiently controlled conditions with the mixed liquid being effectively cooled, to thereby industrially produce a homogeneous sol. In addition, according to the present invention, there is provided a gel producing apparatus or a gel producing method for producing a gel having a co-continuous structure of a skeleton phase and a solvent phase by using a sol produced by the sol producing apparatus or the sol producing method and inducing sol-gel transition with a phase separation process. Furthermore, according to the present invention, there are provided a silica porous body producing apparatus and a silica porous body producing method for producing a silica porous body having macropores by using a gel produced by the gel producing apparatus or the gel producing method.

### BRIEF DESCRIPTION OF THE DRAWINGS

Figure 1 is a schematic view illustrating a configuration of a sol producing apparatus according to one embodiment;
Figure 2 is a schematic view illustrating a configuration of a sol producing section according to a first embodiment;
Figure 3 is a schematic view illustrating a configuration of a sol producing section according to a second embodiment;
Figure 4 is a schematic view illustrating a configuration of a sol producing section according to a third embodiment;
Figure 5 is a schematic view illustrating a configuration of a sol producing section according to a fourth embodiment;
Figure 6 is a schematic view illustrating a configuration of a sol producing section according to a fifth embodiment;
Figure 7 is a schematic view illustrating a first variation of the sol producing sections according to the first to fifth embodiments;
Figure 8 is a schematic view illustrating a second variation of the sol producing sections according to the first to fifth embodiments;
Figure 9 is a schematic view illustrating a third variation of the sol producing sections according to the first to fifth embodiments;
Figure 10 is a schematic cross-sectional view for describing a step of preparing a mixed liquid containing a silica precursor, a catalyst and a macropore forming agent, in a mixer;
Figure 11 is a schematic view illustrating a configuration of a gel producing apparatus according to one embodiment;
Figure 12 is a schematic view illustrating configurations of a heating section and a sol feeding section included in a gel producing section according to one embodiment;
Figure 13 is a schematic view illustrating a configuration of a silica porous body producing apparatus according to one embodiment;
Figure 14 is a schematic view illustrating a configuration of a silica porous body producing section according to one embodiment;
Figure 15 includes SEM images representing a structure of a surface of a silica monolith produced in Example 1, as taken with a scanning electron microscope (SEM); and
Figure 16 includes SEM images representing structures of surfaces of silica monoliths produced in Examples 2 to 5, as taken with a scanning electron microscope (SEM).

### DETAILED DESCRIPTION OF THE INVENTION

Hereinafter, embodiments of the present invention are described.

### <<Sol producing apparatus>>

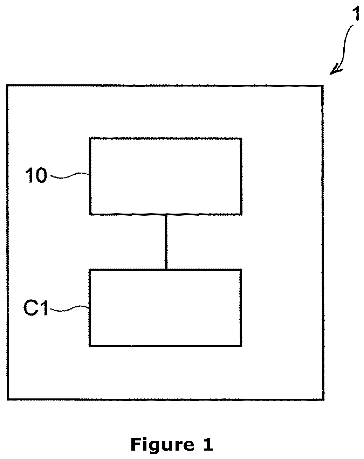

Hereinafter, a sol producing apparatus 1 according to one embodiment of the present invention is described based on Figure 1. Figure 1 is a schematic view illustrating a configuration of the sol producing apparatus 1.

The sol producing apparatus 1 includes a sol producing section 10 and a controlling section C1 that controls an operation of the sol producing section 10.

The sol producing section 10 performs various kinds of processing for producing a sol. Such various kinds of processing to be performed by the sol producing section 10 are described below.

The controlling section C1 is, for example, a computer, and includes a main controlling section and a memorizing section. The main controlling section is, for example, a CPU (Central Processing Unit), and reads out and executes a program, data, and the like memorized in the memorizing section to thereby control an operation of the sol producing section 10. The memorizing section is, for example, configured from memorizing devices such as RAM (Random Access Memory), ROM (Read Only Memory), and a hard disc, and memorizes a program, data, and the like for control of processing executed in the sol producing section 10. Such a program may be recorded in a memorizing medium readable by a computer, or may be installed in the memorizing section from the memorizing medium. For example, a program is recorded in the recording medium, in which the program, when executed by a computer for controlling an operation of the sol producing apparatus 1, allows the computer to control the sol producing apparatus 1 so that a sol producing method described below is performed.

### <<Sol producing section>>

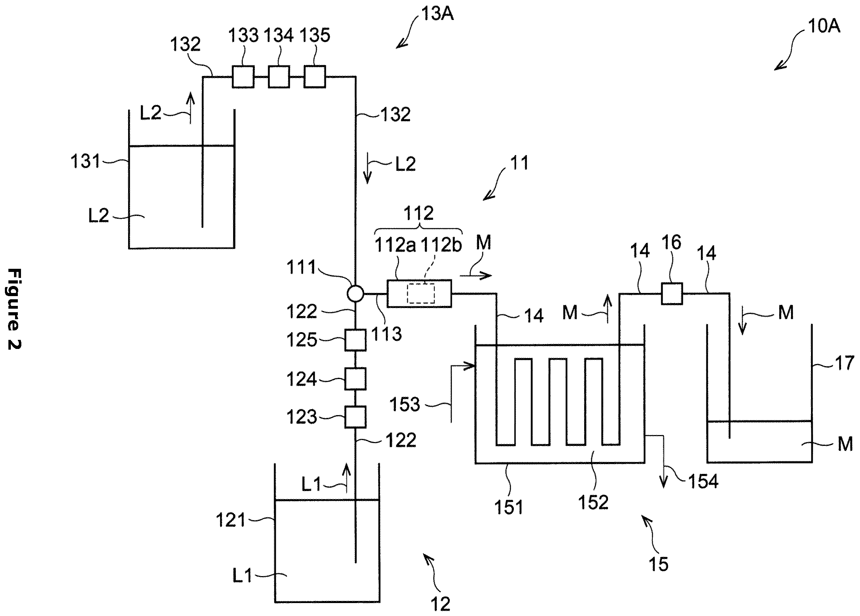

Hereinafter, embodiments of the sol producing section 10 are described based on Figures 2 to 6.

### <First embodiment>

Hereinafter, a sol producing section 10A according to a first embodiment is described based on Figure 2. Figure 2 is a schematic view illustrating a configuration of the sol producing section 10A. Each arrow in Figure 2 indicates a flowing direction of a liquid.

The sol producing section 10A includes a mixing section 11 that prepares a mixed liquid M containing a silica precursor, a catalyst and a macropore forming agent, a first feeding section 12 that feeds the silica precursor to the mixing section 11, a second feeding section 13A that feeds the catalyst and the macropore forming agent in admixture with each other, to the mixing section 11, a discharging pipe 14 that discharges the mixed liquid M from the mixing section 11, and a cooling section 15 that cools the mixed liquid M flowing through the discharging pipe 14, to 35°C or less. The sol producing section 10A may include a recovering container 17 that recovers the mixed liquid M discharged from the discharging pipe 14.

The first feeding section 12 includes a storing tank 121 that stores a stock liquid L1 containing the silica precursor, a feeding pipe 122 that feeds the stock liquid L1 in the storing tank 121, to the mixing section 11, and a pump 123 provided in the feeding pipe 122.

The first feeding section 12 feeds the stock liquid L1 in the storing tank 121 through the feeding pipe 122 to the mixing section 11 by use of suction force and ejection force of the pump 123. The silica precursor is thus fed in the form of the stock liquid L1 to the mixing section 11 by the first feeding section 12.

The silica precursor is a silicon compound having a hydrolyzable functional group. The number of such a hydrolyzable functional group in the silicon compound may be 1 or 2, and is preferably 3 or more, more preferably 4, from the viewpoint that a gel having a highly crosslinked structure by a siloxane bond (-Si-O-Si-) is produced. When the silicon compound has 2 or more hydrolyzable functional groups, the types of such 2 or more hydrolyzable functional groups may be the same as or different from each other.

Such a hydrolyzable functional group is a functional group to be converted into a hydroxy group by hydrolysis. Examples of such a hydrolyzable functional group include an alkoxy group, an acetoxy group, a halide group, and a hydrosilyl group, and an alkoxy group is preferable. Such an alkoxy group is preferably an alkoxy group having 1 to 10 carbon atoms, more preferably an alkoxy group having 1 to 5 carbon atoms, much more preferably a methoxy group, an ethoxy group and a propyl group. Such an alkoxy group may be linear or branched.

The silicon compound having a hydrolyzable functional group may have a functional group other than the hydrolyzable functional group. Examples of the functional group other than the hydrolyzable functional group include an alkyl group, an alkenyl group, a phenyl group, a phenoxy group, a hydroxy group, a carboxyl group, an epoxy group, an aldehyde group, a thiol group, an amino group, an acryloyl group, and a methacryloyl group. The alkyl group is preferably an alkyl group having 1 to 10 carbon atoms, more preferably an alkyl group having 1 to 5 carbon atoms, much more preferably a methyl group, an ethyl group and a propyl group. The alkyl group may be linear or branched. The alkenyl group is preferably an alkenyl group having 2 to 10 carbon atoms, more preferably an alkenyl group having 2 to 5 carbon atoms, much more preferably a vinyl group. The alkenyl group may be linear or branched.

The silicon compound having a hydrolyzable functional group is preferably an alkoxysilane. Examples of the alkoxysilane include tetraalkoxysilane, trialkoxysilane, dialkoxysilane, and monoalkoxysilane. Among these, tetraalkoxysilane, trialkoxysilane, and dialkoxysilane are preferable, tetraalkoxysilane and trialkoxysilane are more preferable, and tetraalkoxysilane is much more preferable, from the viewpoint of allowing a hydrolysis reaction and a polycondensation reaction to easily progress.

Examples of the tetraalkoxysilane include tetramethoxysilane, tetraethoxysilane, and tetrapropoxysilane.

Examples of the trialkoxysilane include trimethoxysilane, methyltrimethoxysilane, ethyltrimethoxysilane, triethoxysilane, methyltriethoxysilane, ethyltriethoxysilane, tripropoxysilane, methyltripropoxysilane, and ethyltripropoxysilane.

Examples of the dialkoxysilane include methyldimethoxysilane, dimethyldimethoxysilane, methyldiethoxysilane, dimethyldiethoxysilane, ethyldimethoxysilane, diethyldimethoxysilane, ethyldiethoxysilane, and diethyldiethoxysilane.

Examples of the monoalkoxysilane include dimethylmethoxysilane and dimethylethoxysilane.

The stock liquid L1 may contain a solvent. In one embodiment, the solvent is water. In another embodiment, the solvent is a mixed solvent of water and an organic solvent. Examples of the organic solvent include alcohols such as methanol, ethanol, n-propanol, 2-propanol, ethylene glycol, propylene glycol and 1,4-butanediol; and ketones such as acetone and methyl ethyl ketone. When the mixed solvent of water and the organic solvent is used, the content of the organic solvent is preferably 65% by mass or less based on the mass of the mixed solvent.

In a case where the silica precursor is a liquid at ordinary temperature, the stock liquid L1 may contain no solvent and may be singly formed from the silica precursor.

The feeding pipe 122 may be provided with a flow meter 124 that detects the flow rate of the stock liquid L1 flowing through the feeding pipe 122.

The feeding pipe 122 may be provided with a flow regulator 125 that regulates the flow rate of the stock liquid L1 flowing through the feeding pipe 122. The flow regulator 125 is, for example, a valve. The flow regulator 125 may regulate the flow rate of the stock liquid L1 flowing through the feeding pipe 122, based on the flow rate of the stock liquid L1, detected by the flow meter 124.

While Figure 2 illustrates, as one embodiment, a configuration where the pump 123, the flow meter 124 and the flow regulator 125 are sequentially arranged in a flowing direction of the stock liquid L1, for example, a design may be adopted where the pump 123 also having a flow controlling function is used to thereby omit the flow regulator 125, or a design may be adopted where the arranging order of the flow meter 124 and flow regulator 125 is reversed. Each embodiment, each variation, and the like described below can also be changed in design in the same manner.

The second feeding section 13A includes a storing tank 131 that stores a stock liquid L2 containing the catalyst and the macropore forming agent, a feeding pipe 132 that feeds the stock liquid L2 in the storing tank 131, to the mixing section 11, and a pump 133 provided in the feeding pipe 132.

The second feeding section 13A feeds the stock liquid L2 in the storing tank 131 through the feeding pipe 132 to the mixing section 11 by use of suction force and ejection force of the pump 133. The catalyst and the macropore forming agent are thus fed in the form of the stock liquid L2 (namely, in admixture with each other) to the mixing section 11 by the second feeding section 13A.

The catalyst serves as a catalyst of a hydrolysis reaction. Examples of the catalyst include an acid and a base. Examples of the acid include inorganic acids such as hydrochloric acid, sulfuric acid and nitric acid; and organic acids such as formic acid, acetic acid, oxalic acid and citric acid. Examples of the base include sodium hydroxide, potassium hydroxide, ammonia water, sodium carbonate, sodium hydrogen carbonate, amines such as trimethylammonium, ammonium hydroxides such as tert-butylammonium hydroxide, and alkali metal alkoxides such as sodium methoxide.

The macropore forming agent contributes to formation of macropores in a silica porous body. Examples of the macropore forming agent include a water-soluble polymer and a surfactant. Among these, a water-soluble polymer is preferable. The water-soluble polymer induces sol-gel transition with a phase separation process (typically spinodal decomposition), and contributes to formation of a co-continuous structure of a skeleton phase and a solvent phase in a gel and thus formation of macropores in a silica porous body.

Examples of the water-soluble polymer include polyalkylene glycols such as polyethylene glycol and polypropylene glycol, polyacrylic acid, a polyethylene glycol-polypropylene glycol block copolymer, polyvinylpyrrolidone, a polystyrenesulfonic acid sodium salt, and polyallylamine hydrochloride.

The weight average molecular weight of the water-soluble polymer is preferably 8000 or more and 15000 or less, from the viewpoint that a phase separation process (typically spinodal decomposition) is efficiently performed. The weight average molecular weight is measured by GPC (gel permeation chromatography).

Examples of the surfactant include cationic surfactants such as cetyl trimethylammonium chloride, anionic surfactants such as sodium dodecyl sulfate, and non-ionic surfactants such as polyoxyethylene alkyl ether.

The stock liquid L2 may contain a solvent. The above description about the solvent contained in the stock liquid L1 also applies to the solvent contained in the stock liquid L2.

The stock liquid L2 may contain a mesopore forming agent. The mesopore forming agent contributes to formation of mesopores in a silica porous body. Examples of the mesopore forming agent include a nitrogen compound. Examples of such a nitrogen compound usable as the mesopore forming agent include amide compounds such as urea, formamide, N-methylformamide, N,N-dimethylformamide, acetamide, N-methylacetamide and N,N-dimethylacetamide; and heterocyclic compounds such as hexamethylenetetramine. Among these, urea is preferable, from the viewpoint of efficient mesopore formation.

In a case where the stock liquid L2 contains the mesopore forming agent, the mesopore forming agent is fed in the form of the stock liquid L2 (namely, in admixture with the catalyst and the macropore forming agent) to the mixing section 11 by the second feeding section 13A.

The feeding pipe 132 may be provided with a flow meter 134 that detects the flow rate of the stock liquid L2 flowing through the feeding pipe 132.

The feeding pipe 132 may be provided with a flow regulator 135 that regulates the flow rate of the stock liquid L2 flowing through the feeding pipe 132. The flow regulator 135 is, for example, a valve. The flow regulator 135 may regulate the flow rate of the stock liquid L2 flowing through the feeding pipe 132, based on the flow rate of stock liquid L2, detected by the flow meter 134.

The mixing section 11 includes a joining section 111, a mixer 112, and a connecting pipe 113 that connects the joining section 111 and the mixer 112.

The joining section 111 is a portion that joins the feeding pipe 122 and the feeding pipe 132. The stock liquid L1 fed through the feeding pipe 122 and the stock liquid L2 fed through the feeding pipe 132 are joined in the joining section 111. The joining section 111 may be, for example, configured by a T-shaped pipe, a Y-shaped pipe, or the like, or may be configured by a static mixer, a dynamic mixer, or the like. The static mixer and the dynamic mixer are described below. The above description about the joining section 111 also applies to joining sections (joining section 130 and the like) in second embodiment to fifth embodiment described below.

The mixer 112 includes a mixing pipe 112a and a mixing section 112b provided in the mixing pipe 112a. The mixer 112 is a mixer generally called a line mixer or an inline mixer, in which a liquid flowing through the mixing pipe 112a is mixed by the mixing section 112b.

One end of the connecting pipe 113 is connected to the joining section 111, and the other end of the connecting pipe 113 is connected to an inflow port formed at an upstream end of the mixing pipe 112a. The stock liquids L1 and L2 joined in the joining section 111 flow into the mixing pipe 112a through the connecting pipe 113 and the inflow port of the mixing pipe 112a. The connecting pipe 113 may be integrally coupled with a pipe that configures the joining section 111 and/or the mixing pipe 112a of the mixer 112 (namely, the connecting pipe 113 and a pipe that configures the joining section 111 and/or the mixing pipe 112a of the mixer 112 may be configured by one pipe).

The mixing section 112b mixes the stock liquids L1 and L2 flowing into the mixing pipe 112a and flowing downstream through the mixing pipe 112a, to thereby prepare a mixed liquid M containing the silica precursor, the catalyst and the macropore forming agent. In a case where the stock liquid L2 contains the mesopore forming agent, the mixed liquid M further contains the mesopore forming agent.

Examples of the mixer 112 include a static mixer and a dynamic mixer.

The static mixer mixes the stock liquids L1 and L2 without any driving force, to thereby prepare the mixed liquid M. A mixing section 112b in the static mixer includes, for example, a mixing element of a twisted blade (shape obtained by twisting a rectangular plate at a predetermined angle of twist with, as a center, a central axis in a longitudinal direction of the plate). The mixing section 112b in the static mixer applies division, re-joining, flow reversal, and/or the like to the stock liquids L1 and L2, to thereby mix the stock liquids L1 and L2 without any driving force and then prepare the mixed liquid M.

The dynamic mixer mixes the stock liquids L1 and L2 by use of driving force, to thereby prepare the mixed liquid M. Examples of the dynamic mixer include a homogenizer and a homomixer. A mixing section 112b in the dynamic mixer includes, for example, a shaft, a stirring blade provided on the shaft, and a driving section that rotates the shaft, and allows the shaft and the stirring blade to be rotated by the driving section, thereby mixing the stock liquids L1 and L2 and then preparing the mixed liquid M.

The mixed liquid M prepared by the mixing section 112b flows downstream in the mixing pipe 112a, and flows out from the mixing pipe 112a through an outflow port formed at a downstream end of the mixing pipe 112a.

One end of the discharging pipe 14 is connected to the outflow port of the mixing pipe 112a, and the mixed liquid M flowing out through the outflow port of the mixing pipe 112a flows through the discharging pipe 14 and is discharged from the other end of the discharging pipe 14. The mixed liquid M discharged from the other end of the discharging pipe 14 is, for example, recovered in the recovering container 17.

The cooling section 15 includes a cooling tank 151 and a cooling medium 152 contained in the cooling tank 151.

At least one portion of the discharging pipe 14 is in contact with the cooling medium 152 in the cooling section 15, and the mixed liquid M flowing through the discharging pipe 14 is cooled by the cooling medium 152. In a case where the cooling medium 152 is a liquid such as cooling water, a portion of the discharging pipe 14, the portion being immersed in the cooling medium 152, is in contact with the cooling medium 152.

A portion of the discharging pipe 14, the portion being in contact with the cooling medium 152, may have a linear, tortuous or spiral shape.

The time during which the mixed liquid M flowing through the discharging pipe 14 is cooled by the cooling medium 152 (namely, the time taken for allowing the mixed liquid M to flow in a portion of the discharging pipe 14, the portion being in contact with the cooling medium 152) is preferably 1 second or more, more preferably 3 seconds or more, from the viewpoint of an enhancement in cooling effect by the cooling medium 152. The upper limit can be appropriately adjusted, and is preferably 50 minutes or less, from the viewpoint of allowing a phase separation process (typically spinodal decomposition) to properly progress.

The time during which the mixed liquid M flowing through the discharging pipe 14 is cooled by the cooling medium 152 can be adjusted by adjusting, for example, the inner diameter and the length of a portion of the discharging pipe 14, the portion being in contact with the cooling medium 152, and the flow rate of the mixed liquid M flowing through the discharging pipe 14.

The inner diameter of a portion of the discharging pipe 14, the portion being in contact with the cooling medium 152, is preferably 0.5 mm or more and 200 mm or less, more preferably 0.5 mm or more and 100 mm or less, from the viewpoint of an enhancement in cooling effect by the cooling medium 152.

The length of a portion of the discharging pipe 14, the portion being in contact with the cooling medium 152, is preferably 50 mm or more and 10000 mm or less, more preferably 50 mm or more and 8000 mm or less, from the viewpoint of an enhancement in cooling effect by the cooling medium 152.

The flow rate of the mixed liquid M flowing through the discharging pipe 14 is preferably 5 mL/min or more and 3000 mL/min or less, more preferably 10 mL/min or more and 500 mL/min or less, from the viewpoint of an enhancement in cooling effect by the cooling medium 152.

The cooling section 15 may include a cooling medium feeding section 153 that feeds the cooling medium 152 to the cooling tank 151, and a cooling medium discharging section 154 that discharges the cooling medium 152 from the cooling tank 151.

The cooling medium 152 is, for example, a liquid such as cooling water. The cooling medium 152 may be gaseous.

The cooling medium 152 is in contact with an outer periphery of the discharging pipe 14, to thereby cool the mixed liquid M flowing through the discharging pipe 14. While the outer periphery of the discharging pipe 14 and the cooling medium 152 are in direct contact with each other in the present embodiment, the outer periphery of the discharging pipe 14 and the cooling medium 152 may also be in indirect contact with each other with a member formed from a material high in heat conductivity, such as a metal, being interposed therebetween. For example, the discharging pipe 14 may be wound around an outer periphery of a cooling pipe (not illustrated) where the cooling medium 152 flows.

The cooling section 15 cools the mixed liquid M flowing through the discharging pipe 14, to 35°C or less, by the cooling medium 152. This can allow solation of the mixed liquid M to progress under sufficiently controlled conditions with the mixed liquid M being effectively cooled, thereby industrially producing a homogeneous sol. In addition, use of the sol thus produced can allow sol-gel transition with a phase separation process to be induced, thereby producing a gel having a co-continuous structure of a skeleton phase and a solvent phase and producing a silica porous body having macropores.

A temperature of the mixed liquid M of "35°C or less" is a temperature of the mixed liquid M immediately after cooling by the cooling section 15. The temperature of the mixed liquid M immediately after cooling by the cooling section 15 is detected, for example, after cooling of the mixed liquid M by the cooling medium 152 and before recovery of the mixed liquid M in the recovering container 17.

A thermometer 16 that detects the temperature of the mixed liquid M flowing through the discharging pipe 14 may be provided downstream of a portion of the discharging pipe 14, the portion being in contact with the cooling medium 152.

The temperature of the mixed liquid M immediately after cooling by the cooling section 15 is detected by, for example, the thermometer 16.

The temperature of the mixed liquid M immediately after cooling by the cooling section 15 is preferably 35°C or less, more preferably 30°C or less, from the viewpoint that a homogeneous sol allowing for proper formation of macropores is obtained. The lower limit may be any temperature so that the mixed liquid M is not frozen, and is preferably specifically about 1°C or 2°C.

The temperature of the cooling medium 152 is adjusted so that the mixed liquid M flowing through the discharging pipe 14 is cooled to 35°C or less. The temperature of the cooling medium 152 is preferably -5°C or more and 30°C or less, more preferably 0°C or more and 30°C or less, from the viewpoint of an enhancement in cooling effect by the cooling medium 152.

The cooling section 15 may adjust the temperature of the cooling medium 152 based on the temperature of the mixed liquid M, detected by the thermometer 16. For example, the cooling section 15 may adjust the temperature and/or the flow rate of the cooling medium 152 fed from the cooling medium feeding section 153, the flow rate of the cooling medium 152 discharged from the cooling medium discharging section 154, and the like, based on the temperature of the mixed liquid M, detected by the thermometer 16.

### <Second embodiment>

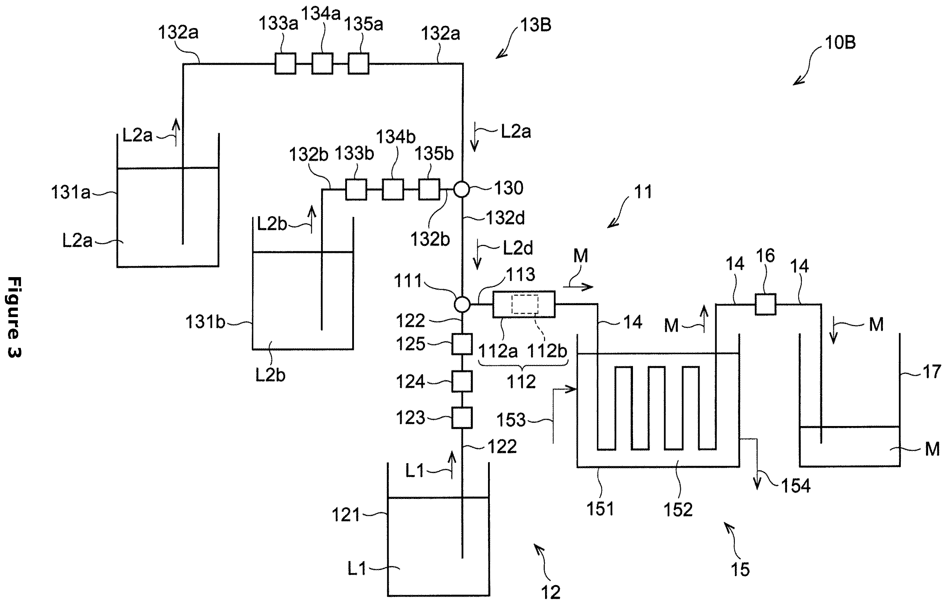

Hereinafter, a sol producing section 10B according to a second embodiment is described based on Figure 3. Figure 3 is a schematic view illustrating a configuration of the sol producing section 10B. Each arrow in Figure 3 indicates a flowing direction of a liquid.

The sol producing section 10B includes a mixing section 11 that prepares a mixed liquid M containing a silica precursor, a catalyst and a macropore forming agent, a first feeding section 12 that feeds the silica precursor to the mixing section 11, a second feeding section 13B that feeds the catalyst and the macropore forming agent in admixture with each other, to the mixing section 11, a discharging pipe 14 that discharges the mixed liquid M from the mixing section 11, and a cooling section 15 that cools the mixed liquid M flowing through the discharging pipe 14, to 35°C or less. The sol producing section 10B may include a recovering container 17 that recovers the mixed liquid M discharged through the discharging pipe 14.

The above description about the sol producing section 10A applies to any element in a configuration of the sol producing section 10B, such any element being represented by the same symbol as in the sol producing section 10A, unless otherwise defined. Hereinafter, any element in a configuration of the sol producing section 10B, such any element being different from that of the sol producing section 10A, is described.

The sol producing section 10B is different from the sol producing section 10A in that the second feeding section 13B is adopted.

The second feeding section 13B includes a storing tank 131a that stores a stock liquid L2a containing the catalyst, a feeding pipe 132a that feeds the stock liquid L2a in the storing tank 131a, to a joining section 130, and a pump 133a provided in the feeding pipe 132a. In addition, the second feeding section 13B includes a storing tank 131b that stores a stock liquid L2b containing the macropore forming agent, a feeding pipe 132b that feeds the stock liquid L2b in the storing tank 131b, to the joining section 130, and a pump 133b provided in the feeding pipe 132b. Furthermore, the second feeding section 13B includes a feeding pipe 132d that feeds a mixed liquid L2d, which is a mixed liquid of the stock liquids L2a and L2b generated in the joining section 130, to the mixing section 11.

The second feeding section 13B feeds the stock liquid L2a in the storing tank 131a through the feeding pipe 132a to the joining section 130 by use of suction force and ejection force of the pump 133a. In addition, the second feeding section 13B feeds the stock liquid L2b in the storing tank 131b through the feeding pipe 132b to the joining section 130 by use of suction force and ejection force of the pump 133b. Furthermore, the second feeding section 13B feeds the mixed liquid L2d generated in the joining section 130, through the feeding pipe 132d to the mixing section 11 by use of ejection force of the pumps 133a and 133b. Thus, the catalyst and the macropore forming agent are fed in the form of the mixed liquid L2d (namely, in admixture with each other) to the mixing section 11 by the second feeding section 13B.

The joining section 130 is a portion that joins the feeding pipe 132a and the feeding pipe 132b. The stock liquid L2a fed through the feeding pipe 132a and the stock liquid L2b fed through the feeding pipe 132b are joined in the joining section 130.

The above description about the catalyst also applies to the catalyst contained in the stock liquid L2a, and the above description about the macropore forming agent also applies to the macropore forming agent contained in the stock liquid L2b.

The stock liquids L2a and L2b may each contain a solvent. The above description about the solvent contained in the stock liquid L1 also applies to the solvents contained in the stock liquids L2a and L2b.

In a case where the catalyst is a liquid at ordinary temperature, the stock liquid L2a may contain no solvent and may be singly formed from the catalyst. In a case where the macropore forming agent is a liquid at ordinary temperature, the stock liquid L2b may contain no solvent and may be singly formed from the macropore forming agent.

One of the stock liquids L2a and L2b may contain a mesopore forming agent, or both of them may each contain a mesopore forming agent. The above description about the mesopore forming agent also applies to the mesopore forming agent contained in the stock liquid L2a and/or the mesopore forming agent contained in the stock liquid L2b.

In a case where one of the stock liquids L2a and L2b contains the mesopore forming agent or where both of them each contain the mesopore forming agent, the mesopore forming agent(s) is/are fed in the form of the mixed liquid L2d (namely, in admixture with the catalyst and the macropore forming agent) to the mixing section 11 by the second feeding section 13B.

The feeding pipe 132a may be provided with a flow meter 134a that detects the flow rate of the stock liquid L2a flowing through the feeding pipe 132a.

The feeding pipe 132a may be provided with a flow regulator 135a that regulates the flow rate of the stock liquid L2a flowing through the feeding pipe 132a. The flow regulator 135a is, for example, a valve. The flow regulator 135a may regulate the flow rate of the stock liquid L2a flowing through the feeding pipe 132a, based on the flow rate of the stock liquid L2a, detected by the flow meter 134a.

The feeding pipe 132b may be provided with a flow meter 134b that detects the flow rate of the stock liquid L2b flowing through the feeding pipe 132b.

The feeding pipe 132b may be provided with a flow regulator 135b that regulates the flow rate of the stock liquid L2b flowing through the feeding pipe 132b. The flow regulator 135b is, for example, a valve. The flow regulator 135b may regulate the flow rate of the stock liquid L2b flowing through the feeding pipe 132b, based on the flow rate of the stock liquid L2b, detected by the flow meter 134b.

The feeding pipe 132a and the feeding pipe 132b are joined in the joining section 130. The stock liquid L2a fed through the feeding pipe 132a and the stock liquid L2b through the feeding pipe 132b are joined in the joining section 130, to thereby generate a mixed liquid L2d as a mixed liquid of the stock liquids L2a and L2b. The mixed liquid L2d generated in the joining section 130 is fed through the feeding pipe 132d to the mixing section 11.

The joining section 111 of the mixing section 11 is a portion that joins the feeding pipe 122 and the feeding pipe 132d. The stock liquid L1 fed through the feeding pipe 122 and the mixed liquid L2d fed through the feeding pipe 132d are joined in the joining section 111. The stock liquid L1 and the mixed liquid L2d joined in the joining section 111 flow into the mixing pipe 112a through the connecting pipe 113 and the inflow port of the mixing pipe 112a.

The mixing section 112b of the mixer 112 mixes the stock liquid L1 and the mixed liquid L2d flowing into the mixing pipe 112a and flowing downstream through the mixing pipe 112a, to thereby prepare a mixed liquid M containing the silica precursor, the catalyst and the macropore forming agent. In a case where one of the stock liquids L2a and L2b contains the mesopore forming agent or where both of them each contain the mesopore forming agent, the mixed liquid M further includes the mesopore forming agent(s).

### <Third embodiment>

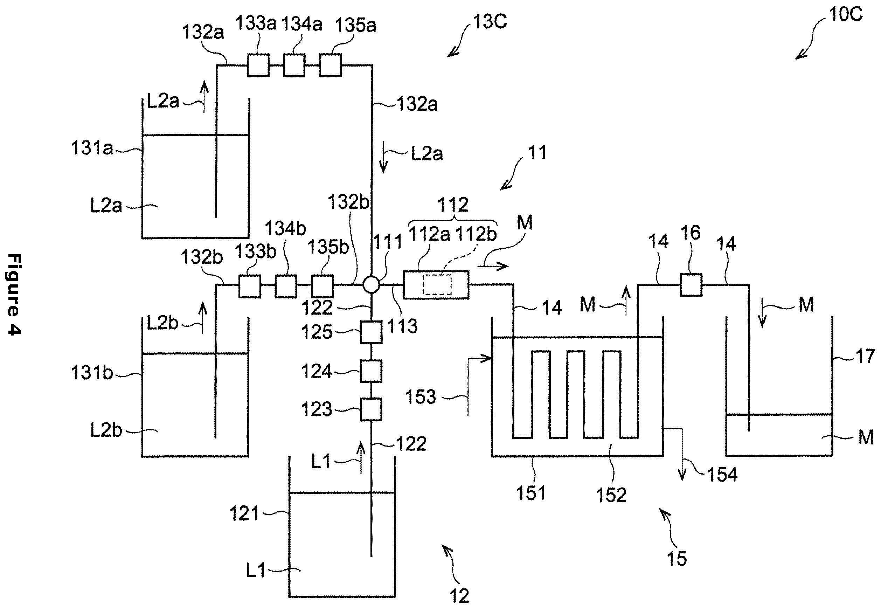

Hereinafter, a sol producing section 10C according to a third embodiment is described based on Figure 4. Figure 4 is a schematic view illustrating a configuration of the sol producing section 10C. Each arrow in Figure 4 indicates a flowing direction of a liquid.

The sol producing section 10C includes a mixing section 11 that prepares a mixed liquid M containing a silica precursor, a catalyst and a macropore forming agent, a first feeding section 12 that feeds the silica precursor to the mixing section 11, a second feeding section 13C that separately feeds the catalyst and the macropore forming agent to the mixing section 11, a discharging pipe 14 that discharges the mixed liquid M from the mixing section 11, and a cooling section 15 that cools the mixed liquid M flowing through the discharging pipe 14, to 35°C or less. The sol producing section 10C may include a recovering container 17 that recovers the mixed liquid M discharged through the discharging pipe 14.

The above description about the sol producing section 10B applies to any element in a configuration of the sol producing section 10C, such any element being represented by the same symbol as in the sol producing section 10B, unless otherwise defined. Hereinafter, any element in a configuration of the sol producing section 10C, such any element being different from that of the sol producing section 10B, is described.

The sol producing section 10C is different from the sol producing section 10B in that the second feeding section 13C that separately feeds the catalyst and the macropore forming agent to the mixing section 11 is adopted.

The second feeding section 13C includes a storing tank 131a that stores a stock liquid L2a containing the catalyst, a feeding pipe 132a that feeds the stock liquid L2a in the storing tank 131a, to the mixing section 11, and a pump 133a provided in the feeding pipe 132a. In addition, the second feeding section 13C includes a storing tank 131b that stores a stock liquid L2b containing the macropore forming agent, a feeding pipe 132b that feeds the stock liquid L2b in the storing tank 131b, to the mixing section 11, and a pump 133b provided in the feeding pipe 132b.

The second feeding section 13C feeds the stock liquid L2a in the storing tank 131a through the feeding pipe 132a to the mixing section 11 by use of suction force and ejection force of the pump 133a. In addition, the second feeding section 13C feeds the stock liquid L2b in the storing tank 131b through the feeding pipe 132b to the mixing section 11 by use of suction force and ejection force of the pump 133b. Thus, the catalyst and the macropore forming agent are fed respectively in the forms of the stock liquids L2a and L2b (namely, separately) to the mixing section 11 by the second feeding section 13C.

In a case where the stock liquid L2a contains a mesopore forming agent, the mesopore forming agent is fed in the form of the stock liquid L2a (namely, in admixture with the catalyst) to the mixing section 11 by the second feeding section 13C.

In a case where the stock liquid L2b contains a mesopore forming agent, the mesopore forming agent is fed in the form of the stock liquid L2b (namely, in admixture with the macropore forming agent) to the mixing section 11 by the second feeding section 13C.

The joining section 111 of the mixing section 11 is a portion that joins the feeding pipe 122, the feeding pipe 132a and the feeding pipe 132b. The stock liquid L1 fed through the feeding pipe 122, the stock liquid L2a fed through the feeding pipe 132a and the stock liquid L2b fed through the feeding pipe 132b are joined in the joining section 111. The stock liquids L1, L2a and L2b joined in the joining section 111 flow into the mixing pipe 112a through the connecting pipe 113 and the inflow port of the mixing pipe 112a.

The mixing section 112b of the mixer 112 mixes the stock liquids L1, L2a and L2b flowing into the mixing pipe 112a and flowing downstream through the mixing pipe 112a, to thereby prepare a mixed liquid M containing the silica precursor, the catalyst and the macropore forming agent. In a case where one of the stock liquids L2a and L2b or where both of them each contain the mesopore forming agent, the mixed liquid M further contains the mesopore forming agent(s).

### <Fourth embodiment>

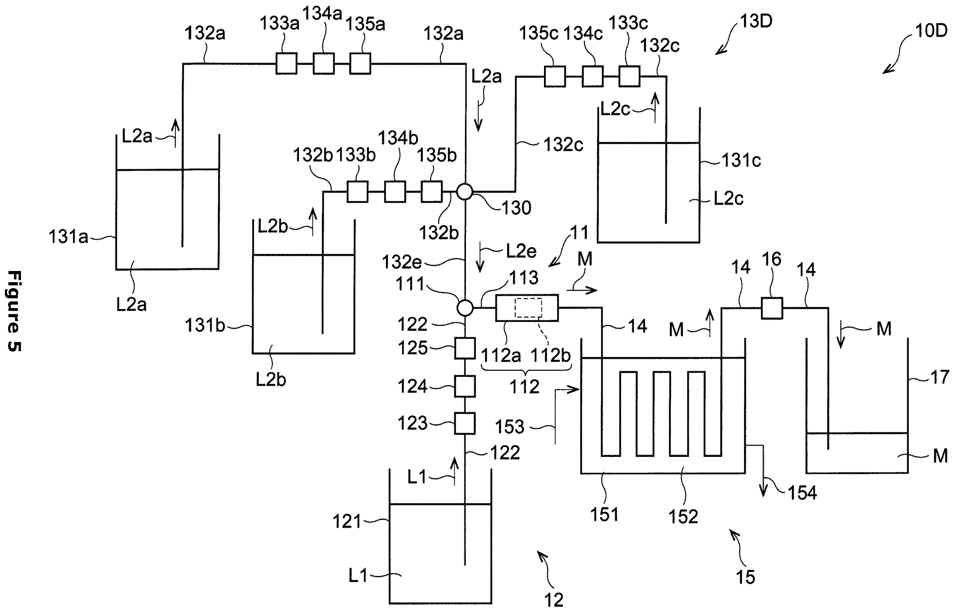

Hereinafter, a sol producing section 10D according to a fourth embodiment is described based on Figure 5. Figure 5 is a schematic view illustrating a configuration of the sol producing section 10D. Each arrow in Figure 5 indicates a flowing direction of a liquid.

The sol producing section 10D includes a mixing section 11 that prepares a mixed liquid M containing a silica precursor, a catalyst, a macropore forming agent and a mesopore forming agent, a first feeding section 12 that feeds the silica precursor to the mixing section 11, a second feeding section 13D that feeds the catalyst, the macropore forming agent and the mesopore forming agent in admixture with each other, to the mixing section 11, a discharging pipe 14 that discharges the mixed liquid M from the mixing section 11, and a cooling section 15 that cools the mixed liquid M flowing through the discharging pipe 14, to 35°C or less. The sol producing section 10D may include a recovering container 17 that recovers the mixed liquid M discharged through the discharging pipe 14.

The above description about the sol producing section 10B applies to any element in a configuration of the sol producing section 10D, such any element being represented by the same symbol as in the sol producing section 10B, unless otherwise defined. Hereinafter, any element in a configuration of the sol producing section 10D, such any element being different from that of the sol producing section 10B, is described.

The sol producing section 10D is different from the sol producing section 10B in that the second feeding section 13D that feeds the catalyst, the macropore forming agent and the mesopore forming agent in admixture with each other, to the mixing section 11, is adopted.

The second feeding section 13D includes a storing tank 131a that stores a stock liquid L2a containing the catalyst, a feeding pipe 132a that feeds the stock liquid L2a in the storing tank 131a, to a joining section 130, and a pump 133a provided in the feeding pipe 132a. In addition, the second feeding section 13D includes a storing tank 131b that stores a stock liquid L2b containing the macropore forming agent, a feeding pipe 132b that feeds the stock liquid L2b in the storing tank 131b, to the joining section 130, and a pump 133b provided in the feeding pipe 132b. Furthermore, the second feeding section 13D includes a storing tank 131c that stores a stock liquid L2c containing the mesopore forming agent, a feeding pipe 132c that feeds the stock liquid L2c in the storing tank 131c, to the joining section 130, and a pump 133c provided in the feeding pipe 132c. Moreover, the second feeding section 13D includes a feeding pipe 132e that feeds a mixed liquid L2e, which is a mixed liquid of the stock liquids L2a, L2b and L2c generated in the joining section 130, to the mixing section 11.

The second feeding section 13D feeds the stock liquid L2a in the storing tank 131a through the feeding pipe 132a to the joining section 130 by use of suction force and ejection force of the pump 133a. In addition, the second feeding section 13D feeds the stock liquid L2b in the storing tank 131b through the feeding pipe 132b to the joining section 130 by use of suction force and ejection force of the pump 133b. Furthermore, the second feeding section 13D feeds the stock liquid L2c in the storing tank 131c through the feeding pipe 132c to the joining section 130 by use of suction force and ejection force of the pump 133c. Moreover, the second feeding section 13D feeds the mixed liquid L2e generated in the joining section 130, through the feeding pipe 132e to the mixing section 11 by use of ejection force of the pumps 133a, 133b and 133c. Thus, the catalyst, the macropore forming agent and the mesopore forming agent are fed in the form of the mixed liquid L2e (namely, in admixture with each other) to the mixing section 11 by the second feeding section 13D.

The above description about the mesopore forming agent also applies to the mesopore forming agent contained in the stock liquid L2c.

The stock liquid L2c may contain a solvent. The above description about the solvent contained in the stock liquid L1 also applies to the solvent contained in the stock liquid L2c.

The feeding pipe 132c may be provided with a flow meter 134c that detects the flow rate of the stock liquid L2c flowing through the feeding pipe 132c.

The feeding pipe 132c may be provided with a flow regulator 135c that regulates the flow rate of the stock liquid L2c flowing through the feeding pipe 132c. The flow regulator 135c is, for example, a valve. The flow regulator 135c may regulate the flow rate of the stock liquid L2c flowing through the feeding pipe 132c, based on the flow rate of the stock liquid L2c, detected by the flow meter 134c.

The feeding pipe 132a, the feeding pipe 132b and the feeding pipe 132c are joined in the joining section 130. The stock liquid L2a fed through the feeding pipe 132a, the stock liquid L2b fed through the feeding pipe 132b and the stock liquid L2c fed through the feeding pipe 132c are joined in the joining section 130, to thereby generate a mixed liquid L2e as a mixed liquid of the stock liquids L2a, L2b and L2c. The mixed liquid L2e generated in the joining section 130 is fed through the feeding pipe 132e to the mixing section 11.

The joining section 111 of the mixing section 11 is a portion that joins the feeding pipe 122 and the feeding pipe 132e. The stock liquid L1 fed through the feeding pipe 122 and the mixed liquid L2e fed through the feeding pipe 132e are joined in the joining section 111. The stock liquid L1 and the mixed liquid L2e joined in the joining section 111 flow into the mixing pipe 112a through the connecting pipe 113 and the inflow port of the mixing pipe 112a.

The mixing section 112b of the mixer 112 mixes the stock liquid L1 and the mixed liquid L2e flowing into the mixing pipe 112a and flowing downstream through the mixing pipe 112a, to thereby prepare a mixed liquid M containing the silica precursor, the catalyst, the macropore forming agent and the mesopore forming agent.

In the second feeding section 13D, the feeding pipe 132c may be joined to the feeding pipe 132a in a portion other than the joining section 130. For example, the feeding pipe 132c may be joined to the feeding pipe 132a in a portion of the feeding pipe 132a, the portion being present upstream of the joining section 130 (for example, a portion located between a flow regulator 135a and the joining section 130).

In the second feeding section 13D, the feeding pipe 132c may be joined to the feeding pipe 132b in a portion other than the joining section 130. For example, the feeding pipe 132c may be joined to the feeding pipe 132b in a portion of the feeding pipe 132b, the portion being present upstream of the joining section 130 (for example, a portion located between a flow regulator 135b and the joining section 130).

In the second feeding section 13D, the storing tank 131a, the feeding pipe 132a and the pump 133a may be omitted and the catalyst may be contained in the stock liquid L2b.

In the second feeding section 13D, the storing tank 131b, the feeding pipe 132b and the pump 133b may be omitted and the macropore forming agent may be contained in the stock liquid L2a.

### <Fifth embodiment>

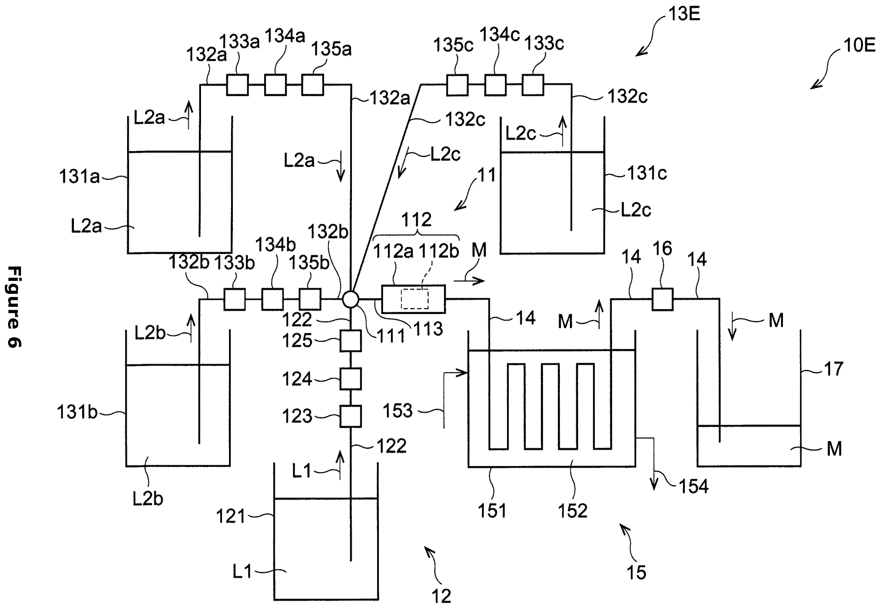

Hereinafter, a sol producing section 10E according to a fifth embodiment is described based on Figure 6. Figure 6 is a schematic view illustrating a configuration of the sol producing section 10E. Each arrow in Figure 6 indicates a flowing direction of a liquid.

The sol producing section 10E includes a mixing section 11 that prepares a mixed liquid M containing a silica precursor, a catalyst, a macropore forming agent and a mesopore forming agent, a first feeding section 12 that feeds the silica precursor to the mixing section 11, a second feeding section 13E that separately feeds the catalyst, the macropore forming agent and the mesopore forming agent to the mixing section 11, a discharging pipe 14 that discharges the mixed liquid M from the mixing section 11, and a cooling section 15 that cools the mixed liquid M flowing through the discharging pipe 14, to 35°C or less. The sol producing section 10E may include a recovering container 17 that recovers the mixed liquid M discharged through the discharging pipe 14.

The above description about the sol producing section 10D applies to any element in a configuration of the sol producing section 10E, such any element being represented by the same symbol as in the sol producing section 10D, unless otherwise defined. Hereinafter, any element in a configuration of the sol producing section 10E, such any element being different from that of the sol producing section 10D, is described.

The sol producing section 10E is different from the sol producing section 10D in that the second feeding section 13E that separately feeds the catalyst, the macropore forming agent and the mesopore forming agent, to the mixing section 11, is adopted.

The second feeding section 13E includes a storing tank 131a that stores a stock liquid L2a containing the catalyst, a feeding pipe 132a that feeds the stock liquid L2a in the storing tank 131a, to the mixing section 11, and a pump 133a provided in the feeding pipe 132a. In addition, the second feeding section 13E includes a storing tank 131b that stores a stock liquid L2b containing the macropore forming agent, a feeding pipe 132b that feeds the stock liquid L2b in the storing tank 131b, to the mixing section 11, and a pump 133b provided in the feeding pipe 132b. Furthermore, the second feeding section 13E includes a storing tank 131c that stores a stock liquid L2c containing the mesopore forming agent, a feeding pipe 132c that feeds the stock liquid L2c in the storing tank 131c, to the mixing section 11, and a pump 133c provided in the feeding pipe 132c.

The second feeding section 13E feeds the stock liquid L2a in the storing tank 131a through the feeding pipe 132a to the mixing section 11 by use of suction force and ejection force of the pump 133a. In addition, the second feeding section 13E feeds the stock liquid L2b in the storing tank 131b through the feeding pipe 132b to the mixing section 11 by use of suction force and ejection force of the pump 133b. Furthermore, the second feeding section 13E feeds the stock liquid L2c in the storing tank 131c through the feeding pipe 132c to the mixing section 11 by use of suction force and ejection force of the pump 133c. Thus, the catalyst, the macropore forming agent and the mesopore forming agent are fed respectively in the forms of the stock liquids L2a, L2b and L2c (namely, separately) to the mixing section 11 by the second feeding section 13E.

The joining section 111 of the mixing section 11 is a portion that joins the feeding pipe 122, the feeding pipe 132a, the feeding pipe 132b and the feeding pipe 132c. The stock liquid L1 fed through the feeding pipe 122, the stock liquid L2a fed through the feeding pipe 132a, the stock liquid L2b fed through the feeding pipe 132b and the stock liquid L2c fed through the feeding pipe 132c are joined in the joining section 111. The stock liquids L1, L2a, L2b and L2c joined in the joining section 111 flow into the mixing pipe 112a through the connecting pipe 113 and the inflow port of the mixing pipe 112a.

The mixing section 112b of the mixer 112 mixes the stock liquids L1, L2a, L2b and L2c flowing into the mixing pipe 112a and flowing downstream through the mixing pipe 112a, to thereby prepare a mixed liquid M containing the silica precursor, the catalyst, the macropore forming agent and the mesopore forming agent.

In the second feeding section 13E, the storing tank 131a, the feeding pipe 132a and the pump 133a may be omitted and the catalyst may be contained in the stock liquid L2b.

In the second feeding section 13E, the storing tank 131b, the feeding pipe 132b and the pump 133b may be omitted and the macropore forming agent may be contained in the stock liquid L2a.

### <First variation>

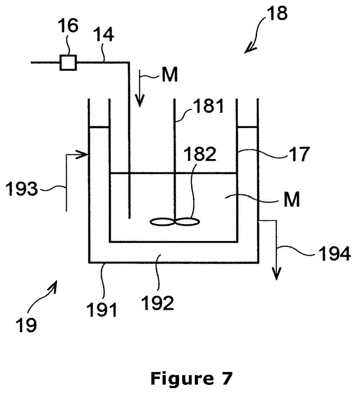

Hereinafter, a first variation of the sol producing sections 10A to 10E is described based on Figure 7. Figure 7 is a schematic view illustrating the first variation of the sol producing sections 10A to 10E. Each arrow in Figure 7 indicates a flowing direction of a liquid.

The first variation of the sol producing sections 10A to 10E includes a stirring section 18 that stirs the mixed liquid M contained in the recovering container 17.

In a case where the flow rate of the mixed liquid M is high, the stirring section 18 is preferably provided in order to prepare a homogeneous sol allowing for proper formation of macropores. Specifically, in a case where the flow rate of the mixed liquid M is 15 mL/min or more, the stirring section 18 is preferably provided.

The stirring section 18 includes, for example, a shaft 181, a stirring blade 182 provided on the shaft 181, and a driving section (not illustrated) that rotates the shaft 181. The driving section rotates the shaft 181 and the stirring blade 182 to thereby stir the mixed liquid M contained in the recovering container 17.

The first variation of the sol producing sections 10A to 10E may include a cooling section 19 that cools the mixed liquid M contained in the recovering container 17, from the viewpoint of making cooling of the mixed liquid M sufficient in a case where the flow velocity of the mixed liquid M is high.

The cooling section 19 includes, for example, a cooling jacket 191 provided on an outer surface of the recovering container 17, and a cooling medium 192 contained in the cooling jacket 191. The cooling medium 192 cools the mixed liquid M contained in the recovering container 17.

The cooling section 19 may include a cooling medium feeding section 193 that feeds the cooling medium 192 to the cooling jacket 191, and a cooling medium discharging section 194 that discharges the cooling medium 192 from the cooling jacket 191.

The cooling medium 192 is, for example, a liquid such as cooling water. The cooling medium 192 may be gaseous.

### <Second variation>

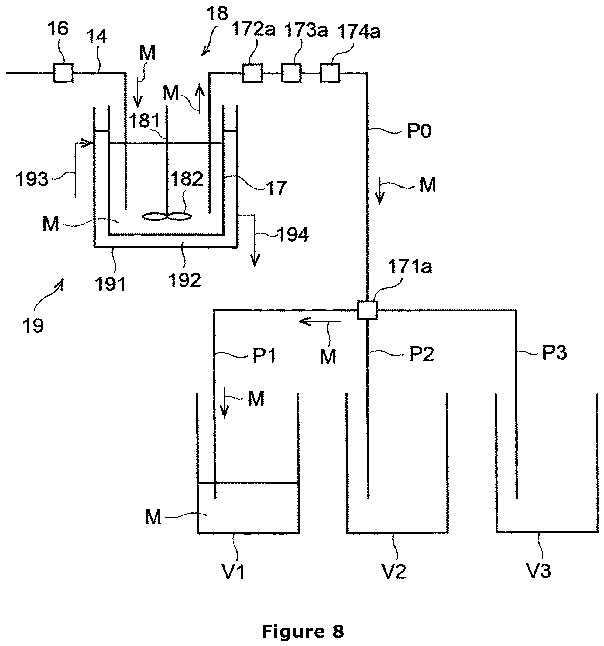

Hereinafter, a second variation of the sol producing sections 10A to 10E is described based on Figure 8. Figure 8 is a schematic view illustrating the second variation of the sol producing sections 10A to 10E. Each arrow in Figure 8 indicates a flowing direction of a liquid. The second variation is an example where a feeding section is provided which feeds the mixed liquid M discharged from the discharging pipe 14 or the mixed liquid M contained in the recovering container 17 to a first container V1, a second container V2, ... , and an n-th container Vn.

The second variation of the sol producing sections 10A to 10E includes a feeding pipe P0 that feeds the mixed liquid M contained in the recovering container 17 to a path switching section 171a, and feeding pipes P1, P2, ... , and Pn that feed the mixed liquid M fed to the path switching section 171a respectively to the first container V1, the second container V2, ... , and the n-th container Vn. Herein, n is not particularly limited as long as it is an integer of 2 or more. In an example illustrated in Figure 8, n = 3 is satisfied.

The feeding pipe P0 is provided with a pump 172a. The mixed liquid M contained in the recovering container 17 is fed to the path switching section 171a by suction force and ejection force of the pump 172a.

The feeding pipe P0 may be provided with a flow meter 173a that detects the flow rate of the mixed liquid M flowing through the feeding pipe P0.

The feeding pipe P0 may be provided with a flow regulator 174a that regulates the flow rate of the mixed liquid M flowing through the feeding pipe P0. The flow regulator 174a is, for example, a valve. The flow regulator 174a may regulate the flow rate of the mixed liquid M flowing through the feeding pipe P0, based on the flow rate of the mixed liquid M, detected by the flow meter 173a.

The path switching section 171a is, for example, a path switching valve. The path switching section 171a switches a path, for example, as follows. First, the path switching section 171a selects the feeding pipe P1 connecting to the first container V1, as a path of the mixed liquid M. Thus, the mixed liquid M is fed to the first container V1. After a predetermined amount of the mixed liquid M is fed to the first container V1, the path switching section 171a switches the path of the mixed liquid M, and selects the feeding pipe P2 connecting to the second container V2, as the path of the mixed liquid M. Thus, the mixed liquid M is fed to the second container V2. After a predetermined amount of the mixed liquid M is fed to the second container V2, the path switching section 171a switches the path of the mixed liquid M, and selects the feeding pipe P3 connecting to the third container V3, as the path of the mixed liquid M. Thus, the mixed liquid M is fed to the third container V3. Similar steps are repeated to thereby feed a predetermined amount of the mixed liquid M to the first container V1, the second container V2, ... , and the n-th container Vn.

The second variation may be combined with the first variation.

In the second variation, the recovering container 17 may be omitted to thereby connect one end of the discharging pipe 14 and one end of the feeding pipe P0. In this case, the discharging pipe 14 and the feeding pipe P0 may be integrally coupled (namely, the discharging pipe 14 and the feeding pipe P0 may be configured by one pipe).

In the second variation, the first container V1, the second container V2, ... , and the n-th container Vn may be each provided with the stirring section 18 and/or the cooling section 19 described in the first variation.

### <Third variation>

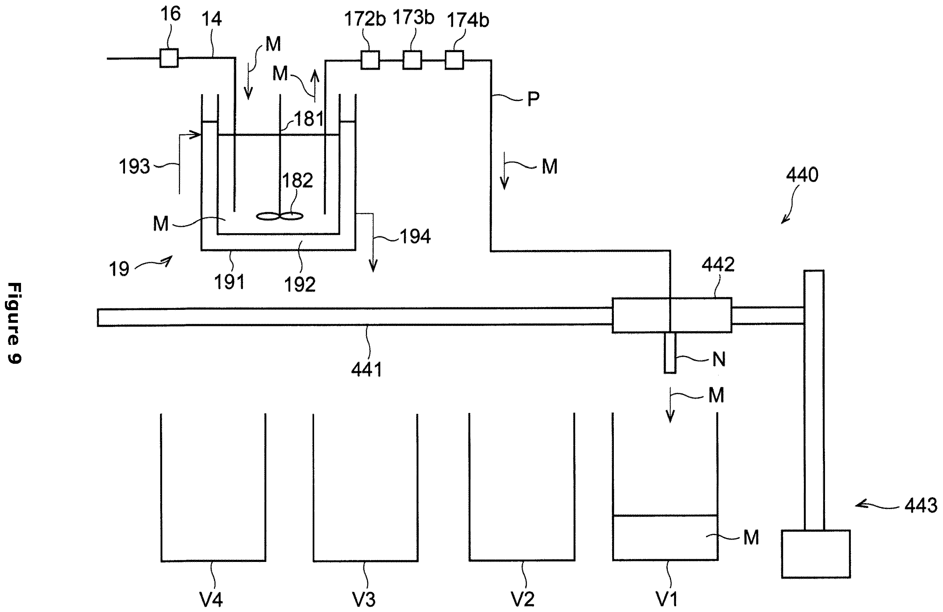

Hereinafter, a third variation of the sol producing sections 10A to 10E is described based on Figure 9. Figure 9 is a schematic view illustrating the third variation of the sol producing sections 10A to 10E. Each arrow in Figure 9 indicates a flowing direction of a liquid. The third variation is an example where a feeding section is provided which feeds the mixed liquid M discharged from the discharging pipe 14 or the mixed liquid M contained in the recovering container 17 to a first container V1, a second container V2, ... , and an n-th container Vn.

The third variation of the sol producing sections 10A to 10E includes a nozzle N that feeds the mixed liquid M contained in the recovering container 17 to the first container V1, the second container V2, ... , and the n-th container Vn. Herein, n is not particularly limited as long as it is an integer of 2 or more. In an example illustrated in Figure 9, n = 4 is satisfied.

A feeding pipe P that feeds the mixed liquid M contained in the recovering container 17 to the nozzle N is connected to the nozzle N.

The feeding pipe P is provided with a pump 172b. The mixed liquid M contained in the recovering container 17 is fed to the nozzle N by suction force and ejection force of the pump 172b.

The feeding pipe P may be provided with a flow meter 173b that detects the flow rate of the mixed liquid M flowing through the feeding pipe P.

The feeding pipe P may be provided with a flow regulator 174b that regulates the flow rate of the mixed liquid M flowing through the feeding pipe P. The flow regulator 174b is, for example, a valve. The flow regulator 174b may regulate the flow rate of the mixed liquid M flowing through the feeding pipe P, based on the flow rate of the mixed liquid M, detected by the flow meter 173b.

The nozzle N is movable by a nozzle moving mechanism 440. The nozzle moving mechanism 440 has an arm 441, a driving mechanism-built-in moving member 442 movable along with the arm 441, and a turning/elevating and lowering mechanism 443 that turns, and elevates and lowers the arm 441. The nozzle N is attached to the moving member 442. The nozzle moving mechanism 440 can move the nozzle N above a predetermined container.

The nozzle N feeds the mixed liquid M to each container, for example, as follows. The nozzle moving mechanism 440 moves the nozzle N above the first container V1. The nozzle N moved above the first container V1 ejects the mixed liquid M toward the first container V1. Thus, the mixed liquid M is fed to the first container V1. After a predetermined amount of the mixed liquid M is fed to the first container V1, the nozzle moving mechanism 440 moves the nozzle N above the second container V2. The nozzle N moved above the second container V2 ejects the mixed liquid M toward the second container V2. Thus, the mixed liquid M is fed to the second container V2. After a predetermined amount of the mixed liquid M is fed to the second container V2, the nozzle moving mechanism 440 moves the nozzle N above the third container V3. The nozzle N moved above the third container V3 ejects the mixed liquid M toward the third container V3. Thus, the mixed liquid M is fed to the third container V3. Similar steps are repeated to thereby feed a predetermined amount of the mixed liquid M to the first container V1, the second container V2, ... , and the n-th container Vn.

The third variation may be combined with the first variation.

In the third variation, the recovering container 17 may be omitted to thereby connect one end of the discharging pipe 14 and one end of the feeding pipe P. In this case, the discharging pipe 14 and the feeding pipe P may be integrally coupled (namely, the discharging pipe 14 and the feeding pipe P may be configured by one pipe).

In the third variation, the first container V1, the second container V2, ... , and the n-th container Vn may be each provided with the stirring section 18 and/or the cooling section 19 described in the first variation.

### <<Sol producing method>>

Hereinafter, a sol producing method performed by the sol producing apparatus 1 is described.

The sol producing method includes the following steps of:
(1A) feeding a silica precursor to the mixing section 11;
(1B) feeding a catalyst and a macropore forming agent in admixture with or separately from each other to the mixing section 11;
(1C) preparing a mixed liquid M containing the silica precursor, the catalyst and the macropore forming agent in the mixing section 11; and
(1D) cooling the mixed liquid M flowing through the discharging pipe 14 connected to the mixing section 11, to 35°C or less, with the mixed liquid M being discharged from the mixing section 11 through the discharging pipe 14.

Steps 1A to 1D are performed by the sol producing section 10. An operation of the sol producing section 10 is controlled by the controlling section C1. In other words, the controlling section C1 allows the sol producing section 10 to perform steps 1Ato 1D.

### <Step 1A>

Step 1A is a step of feeding a silica precursor to the mixing section 11.

Step 1A is performed by, for example, the first feeding section 12. The amount of the silica precursor fed to the mixing section 11, the timing at which the silica precursor is fed to the mixing section 11, the time during which the silica precursor is fed to the mixing section 11, and the like can be adjusted by the first feeding section 12. Accordingly, in a case where step 1A is performed by the first feeding section 12, the silica precursor can be fed under sufficiently controlled conditions, and solation (hydrolysis reaction and polycondensation reaction) of the mixed liquid M can be allowed to progress under sufficiently controlled conditions.

The first feeding section 12 feeds the silica precursor in the form of the stock liquid L1 to the mixing section 11. Specifically, the first feeding section 12 feeds the stock liquid L1 in the storing tank 121 through the feeding pipe 122 to the mixing section 11 by use of suction force and ejection force of the pump 123.

It is preferable that the first feeding section 12 continuously feeds the stock liquid L1 to the mixing section 11 for a predetermined time.

The time during which the first feeding section 12 continuously feeds the stock liquid L1 is appropriately adjusted in consideration of, for example, the volume (diameter and length) of the feeding pipe 122 and suction force and ejection force of the pump 123 so that a homogeneous sol allowing for proper formation of macropores is obtained. The time during which the first feeding section 12 continuously feeds the stock liquid L1 is, for example, 2 seconds or more. The upper limit is not particularly limited, and can be appropriately adjusted depending on the amount and the like of a sol to be produced.

The flow rate of the stock liquid L1 fed by the first feeding section 12 is appropriately adjusted in consideration of, for example, the concentration of the stock liquid L1 so that a homogeneous sol allowing for proper formation of macropores is obtained. The flow rate of the stock liquid L1 fed by the first feeding section 12 is preferably 3 mL/min or more and 450 mL/min or less, more preferably 3 mL/min or more and 200 mL/min or less, much more preferably 3 mL/min or more and 100 mL/min or less, from the viewpoint that such a homogeneous sol is efficiently obtained.

### <Step 1B>

Step 1B is a step of feeding a catalyst and a macropore forming agent in admixture with or separately from each other, to the mixing section 11.

In a case where the mixed liquid M prepared in step 1C contains a mesopore forming agent, the mesopore forming agent is fed in admixture with one of or both the catalyst and the macropore forming agent or separately from the catalyst and the macropore forming agent, to the mixing section 11, in step 1B.

Step 1B is preferably performed so that the catalyst and the macropore forming agent are in simultaneous contact with the silica precursor in the mixing section 11.

In a case where the mixed liquid M prepared in step 1C contains a mesopore forming agent, step 1B is preferably performed so that the catalyst, the macropore forming agent and the mesopore forming agent are in simultaneous contact with the silica precursor in the mixing section 11.

Step 1B is performed by, for example, the second feeding section 13A, 13B, 13C, 13D or 13E. The amounts of the macropore forming agent and optionally the mesopore forming agent fed to the mixing section 11, the timing at which the macropore forming agent and optionally the mesopore forming agent are fed to the mixing section 11, the time during which the macropore forming agent and optionally the mesopore forming agent are fed to the mixing section 11, and the like can be adjusted by the second feeding section 13A, 13B, 13C, 13D or 13E. Accordingly, in a case where step 1B is performed by the second feeding section 13A, 13B, 13C, 13D or 13E, the catalyst, the macropore forming agent and optionally the mesopore forming agent can be fed under sufficiently controlled conditions, and solation (hydrolysis reaction and polycondensation reaction) of the mixed liquid M can be allowed to progress under sufficiently controlled conditions.

a case where step 1B is performed by the second feeding section 13A, the second feeding section 13A feeds the catalyst, the macropore forming agent and optionally the mesopore forming agent in the form of the stock liquid L2 (namely, in admixture with each other) to the mixing section 11. Specifically, the second feeding section 13A feeds the stock liquid L2 in the storing tank 131 through the feeding pipe 132 to the mixing section 11 by use of suction force and ejection force of the pump 133.

It is preferable that the second feeding section 13A continuously feeds the stock liquid L2 to the mixing section 11 for a predetermined time.

The time during which the second feeding section 13A continuously feeds the stock liquid L2 is appropriately adjusted in consideration of, for example, the volume (diameter and length) of the feeding pipe 132 and suction force and ejection force of the pump 133 so that a homogeneous sol allowing for proper formation of macropores is obtained. The time during which the second feeding section 13A continuously feeds the stock liquid L2 is, for example, 2 seconds or more. The upper limit is not particularly limited, and can be appropriately adjusted depending on the amount and the like of a sol to be produced.

It is herein preferable that the time during which the second feeding section 13B continuously feeds a mixed liquid L2d, the time during which the second feeding section 13C continuously feeds stock liquids L2a and L2b, the time during which the second feeding section 13D continuously feeds a mixed liquid L2e, and the time during which the second feeding section 13E continuously feeds stock liquids L2a, L2b and L2c also fall within the same ranges as described above.

The flow rate of the stock liquid L2 fed by the second feeding section 13A is appropriately adjusted in consideration of, for example, the concentration of the stock liquid L1 so that a homogeneous sol allowing for proper formation of macropores is obtained. The flow rate of the stock liquid L2 fed by the second feeding section 13A is preferably 3 mL/min or more and 900 mL/min or less, more preferably 3 mL/min or more and 400 mL/min or less, much more preferably 3 mL/min or more and 100 mL/min or less, from the viewpoint that a homogeneous sol allowing for proper formation of macropores is efficiently obtained.

The timing of feeding of the stock liquid L2 by the second feeding section 13A is preferably adjusted so that the catalyst and the macropore forming agent (in a case where the stock liquid L2 contains a mesopore forming agent, the catalyst, the macropore forming agent and the mesopore forming agent) are in simultaneous contact with the silica precursor in the mixing section 11. The catalyst and the macropore forming agent (in a case where the stock liquid L2 contains a mesopore forming agent, the catalyst, the macropore forming agent and the mesopore forming agent) can be in simultaneous contact with the silica precursor in the mixing section 11, for example, by continuous feeding of the stock liquid L2 to the mixing section 11 by the second feeding section 13A during continuous feeding of the stock liquid L1 to the mixing section 11 by the first feeding section 12.

In a case where step 1B is performed by the second feeding section 13B, the second feeding section 13B feeds the catalyst, the macropore forming agent and optionally the mesopore forming agent in the form of the mixed liquid L2d, which is a mixed liquid of stock liquids L2a and L2b, (namely, in admixture with each other) to the mixing section 11. Specifically, the second feeding section 13B not only feeds the stock liquid L2a in the storing tank 131a through the feeding pipe 132a to the joining section 130 by use of suction force and ejection force of the pump 133a, but also feeds the stock liquid L2b in the storing tank 131b through the feeding pipe 132b to the joining section 130 by use of suction force and ejection force of the pump 133b. In addition, the second feeding section 13B feeds the mixed liquid L2d, which is a mixed liquid of the stock liquids L2a and L2b, generated in the joining section 130, through the feeding pipe 132d to the mixing section 11 by use of ejection force of the pumps 133a and 133b.

It is preferable that the second feeding section 13B continuously feeds the mixed liquid L2d to the mixing section 11 for a predetermined time.

The flow rates of the stock liquids L2a and 2b fed by the second feeding section 13B are appropriately adjusted in consideration of, for example, the concentrations of the stock liquids L2a and 2b. The flow rates of the stock liquids L2a and 2b fed by the second feeding section 13B are preferably adjusted so that the total flow rate of the stock liquids L2a and 2b (= the flow rate of the mixed liquid L2d) is 1 mL/min or more and 900 mL/min or less, from the viewpoint that a homogeneous sol allowing for proper formation of macropores is efficiently obtained.

It is herein preferable that the total flow rate of the stock liquids L2a and 2b fed by the second feeding section 13C and the total flow rate of the stock liquids L2a, 2b and 2c fed by the second feeding section 13D or the second feeding section 13E also fall within the same ranges as described above.

The timing of feeding of the mixed liquid L2d by the second feeding section 13B is preferably adjusted so that the catalyst and the macropore forming agent (in a case where one of the stock liquids L2a and L2b contains a mesopore forming agent or where both of them each contain a mesopore forming agent, the catalyst, the macropore forming agent and the mesopore forming agent(s)) are in simultaneous contact with the silica precursor in the mixing section 11. The catalyst and the macropore forming agent (in a case where one of the stock liquids L2a and L2b contains a mesopore forming agent or where both of them each contain a mesopore forming agent, the catalyst, the macropore forming agent and the mesopore forming agent(s)) can be in simultaneous contact with the silica precursor in the mixing section 11, for example, by continuous feeding of the mixed liquid L2d to the mixing section 11 by the second feeding section 13B during continuous feeding of the stock liquid L1 to the mixing section 11 by the first feeding section 12.

In a case where step 1B is performed by the second feeding section 13C, the second feeding section 13C feeds the catalyst and the macropore forming agent in the form of the stock liquids L2a and L2b (namely, separately) to the mixing section 11. Specifically, the second feeding section 13B not only feeds the stock liquid L2a in the storing tank 131a through the feeding pipe 132a to the mixing section 11 by use of suction force and ejection force of the pump 133a, but also feeds the stock liquid L2b in the storing tank 131b through the feeding pipe 132b to the mixing section 11 by use of suction force and ejection force of the pump 133b.

In a case where the stock liquid L2a contains a mesopore forming agent, the second feeding section 13C feeds the mesopore forming agent in the form of the stock liquid L2a (namely, in admixture with the catalyst) to the mixing section 11.

In a case where the stock liquid L2b contains a mesopore forming agent, the second feeding section 13C feeds the mesopore forming agent in the form of the stock liquid L2b (namely, in admixture with the macropore forming agent) to the mixing section 11.

It is preferable that the second feeding section 13C continuously feeds the stock liquids L2a and L2b to the mixing section 11 for a predetermined time.

The timing of feeding of the stock liquids L2a and L2b by the second feeding section 13C is preferably adjusted so that the catalyst and the macropore forming agent (in a case where one of the stock liquids L2a and L2b contains a mesopore forming agent or where both of them each contain a mesopore forming agent, the catalyst, the macropore forming agent and the mesopore forming agent(s)) are in simultaneous contact with the silica precursor in the mixing section 11. The catalyst and the macropore forming agent (in a case where one of the stock liquids L2a and L2b contains a mesopore forming agent or where both of them each contain a mesopore forming agent, the catalyst, the macropore forming agent and the mesopore forming agent(s)) can be in simultaneous contact with the silica precursor in the mixing section 11, for example, by continuous feeding of the stock liquids L2a and L2b to the mixing section 11 by the second feeding section 13C during continuous feeding of the stock liquid L1 to the mixing section 11 by the first feeding section 12.

In a case where step 1B is performed by the second feeding section 13D, the second feeding section 13D feeds the catalyst, the macropore forming agent and the mesopore forming agent in the form of the mixed liquid L2e (namely, in admixture with each other) to the mixer 11. Specifically, the second feeding section 13D feeds the stock liquid L2a in the storing tank 131a through the feeding pipe 132a to the joining section 130 by use of suction force and ejection force of the pump 133a. In addition, the second feeding section 13D feeds the stock liquid L2b in the storing tank 131b through the feeding pipe 132b to the joining section 130 by use of suction force and ejection force of the pump 133b. Further, the second feeding section 13D feeds the stock liquid L2c in the storing tank 131c through the feeding pipe 132c to the joining section 130 by use of suction force and ejection force of the pump 133c. Moreover, the second feeding section 13D feeds the mixed liquid L2e, which is a mixed liquid of the stock liquids L2a, L2b and L2c, generated in the joining section 130, through the feeding pipe 132e to the mixing section 11 by use of ejection force of the pumps 133a, 133b and 133c.

It is preferable that the second feeding section 13D continuously feeds the mixed liquid L2e to the mixing section 11 for a predetermined time.

The timing of feeding of the mixed liquid L2e by the second feeding section 13D is preferably adjusted so that the catalyst, the macropore forming agent and the mesopore forming agent are in simultaneous contact with the silica precursor in the mixing section 11. The catalyst, the macropore forming agent and the mesopore forming agent can be in simultaneous contact with the silica precursor in the mixing section 11, for example, by continuous feeding of the mixed liquid L2e to the mixing section 11 by the second feeding section 13D during continuous feeding of the stock liquid L1 to the mixing section 11 by the first feeding section 12.

In a case where step 1B is performed by the second feeding section 13E, the second feeding section 13E feeds the catalyst, the macropore forming agent and the mesopore forming agent in the respective forms of the stock liquids L2a, L2b and L2c (namely, separately) to the mixing section 11. Specifically, the second feeding section 13E feeds the stock liquid L2a in the storing tank 131a through the feeding pipe 132a to the mixing section 11 by use of suction force and ejection force of the pump 133a. In addition, the second feeding section 13E feeds the stock liquid L2b in the storing tank 131b through the feeding pipe 132b to the mixing section 11 by use of suction force and ejection force of the pump 133b. Further, the second feeding section 13E feeds the stock liquid L2c in the storing tank 131c through the feeding pipe 132c to the mixing section 11 by use of suction force and ejection force of the pump 133c.

It is preferable that the second feeding section 13E continuously feeds the stock liquids L2a, L2b and L2c to the mixing section 11 for a predetermined time.

The timing of feeding of the stock liquids L2a, L2b and L2c by the second feeding section 13E is preferably adjusted so that the catalyst, the macropore forming agent and the mesopore forming agent are in simultaneous contact with the silica precursor in the mixing section 11. The catalyst, the macropore forming agent and the mesopore forming agent can be in simultaneous contact with the silica precursor in the mixing section 11, for example, by continuous feeding of the stock liquids L2a, L2b and L2c to the mixing section 11 by the second feeding section 13E during continuous feeding of the stock liquid L1 to the mixing section 11 by the first feeding section 12.

### <Step 1C>

Step 1C is a step of preparing the mixed liquid M containing the silica precursor, the catalyst and the macropore forming agent in the mixing section 11. The mixed liquid M may contain a mesopore forming agent.

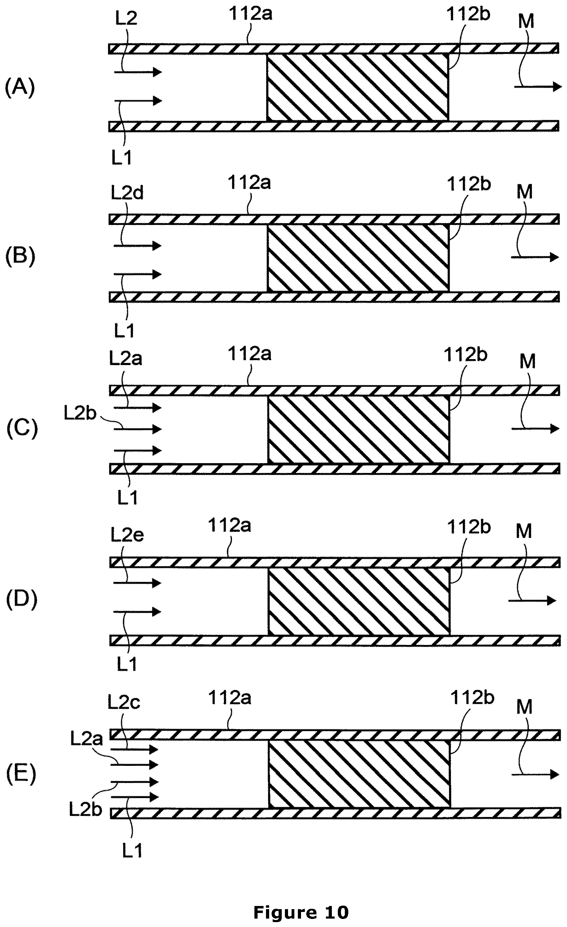

In a case where step 1B is performed by the second feeding section 13A, the stock liquids L1 and L2 joined in the joining section 111 flow into the mixing pipe 112a through the connecting pipe 113 and the inflow port of the mixing pipe 112a. As illustrated in Figure 10(A), the mixing section 112b mixes the stock liquids L1 and L2 flowing into the mixing pipe 112a and flowing downstream through the mixing pipe 112a, to thereby prepare the mixed liquid M containing the silica precursor, the catalyst and the macropore forming agent. In a case where the stock liquid L2 contains a mesopore forming agent, the mixed liquid M further contains the mesopore forming agent.

In a case where step 1B is performed by the second feeding section 13B, the stock liquid L1 and the mixed liquid L2d joined in the joining section 111 flow into the mixing pipe 112a through the connecting pipe 113 and the inflow port of the mixing pipe 112a. As illustrated in Figure 10(B), the mixing section 112b mixes the stock liquid L1 and the mixed liquid L2d flowing into the mixing pipe 112a and flowing downstream through the mixing pipe 112a, to thereby prepare the mixed liquid M containing the silica precursor, the catalyst and the macropore forming agent. In a case where one of the stock liquids L2a and L2b contains a mesopore forming agent or where both of them each contain a mesopore forming agent, the mixed liquid M further contains the mesopore forming agent(s).

In a case where step 1B is performed by the second feeding section 13C, the stock liquids L1, L2a and L2b joined in the joining section 111 flow into the mixing pipe 112a through the connecting pipe 113 and the inflow port of the mixing pipe 112a. As illustrated in Figure 10(C), the mixing section 112b mixes the stock liquids L1, L2a and L2b flowing into the mixing pipe 112a and flowing downstream through the mixing pipe 112a, to thereby prepare the mixed liquid M containing the silica precursor, the catalyst and the macropore forming agent. In a case where one of the stock liquids L2a and L2b contains a mesopore forming agent or where both of them each contain a mesopore forming agent, the mixed liquid M further contains the mesopore forming agent(s).

In a case where step 1B is performed by the second feeding section 13D, the stock liquid L1 and the mixed liquid L2e joined in the joining section 111 flow into the mixing pipe 112a through the connecting pipe 113 and the inflow port of the mixing pipe 112a. As illustrated in Figure 10(D), the mixing section 112b mixes the stock liquid L1 and the mixed liquid L2e flowing into the mixing pipe 112a and flowing downstream through the mixing pipe 112a, to thereby prepare the mixed liquid M containing the silica precursor, the catalyst, the macropore forming agent and the mesopore forming agent.

In a case where step 1B is performed by the second feeding section 13E, the stock liquids L1, L2a, L2b and L2c joined in the joining section 111 flow into the mixing pipe 112a through the connecting pipe 113 and the inflow port of the mixing pipe 112a. As illustrated in Figure 10(E), the mixing section 112b mixes the stock liquids L1, L2a, L2b and L2c flowing into the mixing pipe 112a and flowing downstream through the mixing pipe 112a, to thereby prepare the mixed liquid M containing the silica precursor, the catalyst, the macropore forming agent and the mesopore forming agent.

In all the cases, the mixed liquid M prepared by the mixing section 112b flows downstream in the mixing pipe 112a, and flows out of the mixing pipe 112a from an outflow port formed at a downstream end of the mixing pipe 112a. One end of the discharging pipe 14 is connected to the outflow port of the mixing pipe 112a, and the mixed liquid M flowing out from the outflow port is continuously discharged through the discharging pipe 14.

### <Step 1D>

Step 1D is a step of cooling the mixed liquid M flowing through the discharging pipe 14 connected to the mixing section 11, to 35°C or less, with the mixed liquid M being discharged from the mixing section 11 through the discharging pipe 14.

The mixed liquid M flowing through the discharging pipe 14 is cooled by the cooling medium 152 in the cooling section 15.

The time during which the mixed liquid M flowing through the discharging pipe 14 is cooled by the cooling medium 152 (namely, the time taken for allowing the mixed liquid M to flow in a portion of the discharging pipe 14, the portion being in contact with the cooling medium 152) is preferably 1 second or more, more preferably 3 seconds or more, from the viewpoint of an enhancement in cooling effect by the cooling medium 152. The upper limit can be appropriately adjusted, and is preferably 50 minutes or less, from the viewpoint of allowing a phase separation process (typically spinodal decomposition) to properly progress.

The time during which the mixed liquid M flowing through the discharging pipe 14 is cooled by the cooling medium 152 can be adjusted by adjusting, for example, the inner diameter and the length of a portion of the discharging pipe 14, the portion being in contact with the cooling medium 152, and the flow rate of the mixed liquid M flowing through the discharging pipe 14.

Respective preferable ranges of the inner diameter and the length of a portion of the discharging pipe 14, the portion being in contact with the cooling medium 152, and the flow rate of the mixed liquid M flowing through the discharging pipe 14 are as described above.

The mixed liquid M forms a sol according to progress of a hydrolysis reaction and a polycondensation reaction.

In the hydrolysis reaction, a hydrolyzable functional group in the silica precursor is hydrolyzed to thereby form a hydroxy group. In the polycondensation reaction, a siloxane oligomer is formed by a dehydration condensation reaction (the following formula (1)) between such hydroxy groups and a dealcoholization condensation reaction (the following formula (2)) between such a hydroxy group and a hydrolyzable functional group not hydrolyzed. In the following formula (2), -OR represents a hydrolyzable functional group not hydrolyzed.

≡Si-OH + HO-Si≡ -> ≡Si-O-Si≡ + H₂O (1)

≡Si-OR + HO-Si≡ -> ≡Si-O-Si≡ + ROH (2)

When the hydrolysis reaction and the polycondensation reaction further progress, nanometer-sized primary particles of the siloxane oligomer are formed and such primary particles are aggregated to form secondary particles. Thus, the mixed liquid M forms a sol.

The hydrolysis reaction and the polycondensation reaction start from the time point where the mixed liquid M is prepared, and progress not only for the period where the mixed liquid M is present in the mixing section 11, but also for the period where the mixed liquid M flows in the discharging pipe 14. The hydrolysis reaction and the polycondensation reaction progress even after recovery of the mixed liquid M in the recovering container 17. Accordingly, while all the mixed liquid M present in the mixing section 11, the mixed liquid M flowing through the discharging pipe 14, and the mixed liquid M recovered in the recovering container 17 correspond to sols, the degrees of solation thereof are different from one another.

The mixed liquid M flowing through the discharging pipe 14 is cooled to 35°C or less in the course of solation of the mixed liquid M, and thus a homogeneous sol allowing for proper formation of macropores is obtained.

A temperature of the mixed liquid M of "35°C or less" is a temperature of the mixed liquid M immediately after cooling by the cooling section 15. The temperature of the mixed liquid M immediately after cooling by the cooling section 15 is detected, for example, after cooling of the mixed liquid M by the cooling medium 152 and before recovery of the mixed liquid M in the recovering container 17. The temperature of the mixed liquid M immediately after cooling by the cooling section 15 is detected by, for example, the thermometer 16 provided downstream of a portion of the discharging pipe 14, the portion being in contact with the cooling medium 152.

The temperature of the mixed liquid M immediately after cooling by the cooling section 15 is preferably 35°C or less, more preferably 30°C or less, from the viewpoint that a homogeneous sol allowing for proper formation of macropores is obtained. The lower limit may be any temperature so that the mixed liquid M is not frozen, and is preferably specifically about 1°C or 2°C.

After step 1D, the mixed liquid M discharged from the discharging pipe 14 may be recovered in the recovering container 17.

After step 1D, a step (hereinafter, referred to as "step 1E") of stirring the mixed liquid M contained in the recovering container 17 by the stirring section 18 may be performed. Thus, solation of the mixed liquid M can be allowed to progress to a desired extent, to thereby prepare a homogeneous sol allowing for proper formation of macropores. In a case where the flow rate of the mixed liquid M is high, step 1E is preferably performed. Specifically, in a case where the flow rate of the mixed liquid M is 15 mL/min or more, step 1E is preferably performed.

The stirring time in the stirring section 18 is preferably 1 minute or more and 30 minutes or less, from the viewpoint that a sol-gel reaction is properly performed.

In step 1E, the mixed liquid M contained in the recovering container 17 may be stirred by the stirring section 18 with being cooled by the cooling section 19. The cooling section 19 preferably cools the mixed liquid M contained in the recovering container 17, to 10°C or more and 30°C or less, more preferably 20°C or more and 30°C or less.

After step 1D or after step 1E, the mixed liquid M discharged from the discharging pipe 14 or the mixed liquid M contained in the recovering container 17 may be fed to a first container V1, a second container V2, ... , and an n-th container Vn. The mixed liquid M can be fed to the first container V1, the second container V2, ... , and the n-th container Vn according to the second variation or third variation. The mixed liquid M contained in each of the first container V1, the second container V2, ... , and the n-th container Vn may be stirred by the stirring section 18 and/or cooled by the cooling section 19.

The sol producing method including steps 1A to 1D can allow solation of the mixed liquid M to progress under sufficiently controlled conditions with the mixed liquid M being effectively cooled by the cooling medium 152 in the cooling section 15, thereby industrially producing a homogeneous sol. In addition, the method can allow sol-gel transition with a phase separation process to be induced by use of the sol thus produced, thereby producing a gel having a co-continuous structure of a skeleton phase and a solvent phase and producing a silica porous body having macropores. Accordingly, the sol produced by the sol producing method including steps 1A to 1D is useful as a sol for use in production of a silica porous body having macropores.

### <<Gel producing apparatus>>

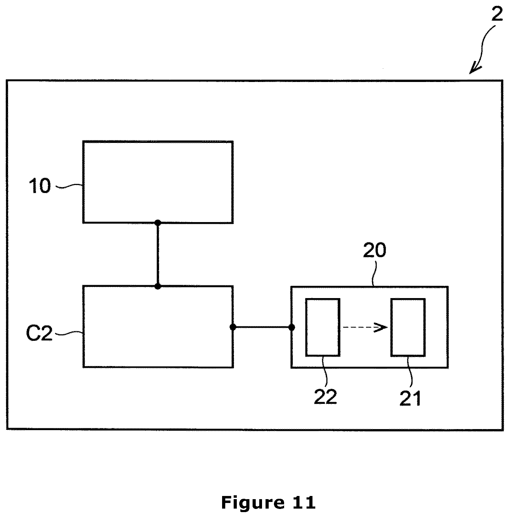

Hereinafter, a gel producing apparatus 2 according to one embodiment of the present invention is described based on Figure 11. Figure 11 is a schematic view illustrating a configuration of the gel producing apparatus 2.

The gel producing apparatus 2 includes a sol producing section 10, a gel producing section 20, and a controlling section C2 that controls operations of the sol producing section 10 and the gel producing section 20. Various kinds of processing to be performed by the sol producing section 10 are as described above.

The gel producing section 20 performs various kinds of processing for producing a gel. Such various kinds of processing to be performed by the gel producing section 20 are described below.

A configuration of the controlling section C2 is the same as the configuration of the controlling section C1. The controlling section C2 is, for example, a computer, and controls operations of the sol producing section 10 and the gel producing section 20. A memorizing section of the controlling section C2 memorizes a program, data, and the like for control of processing executed in the sol producing section 10 and the gel producing section 20, as is the case in the controlling section C1. The above description about a memorizing medium readable by such program and computer also applies to the controlling section C2. For example, a program is recorded in a recording medium, in which the program, when executed by a computer for controlling an operation of the gel producing apparatus 2, allows the computer to control the gel producing apparatus 2 so that a gel producing method described below is performed.

### <<Sol producing section>>

The above description about the sol producing section 10 in the sol producing apparatus 1 also applies to the sol producing section 10 in the gel producing apparatus 2.

### <<Gel producing section>>

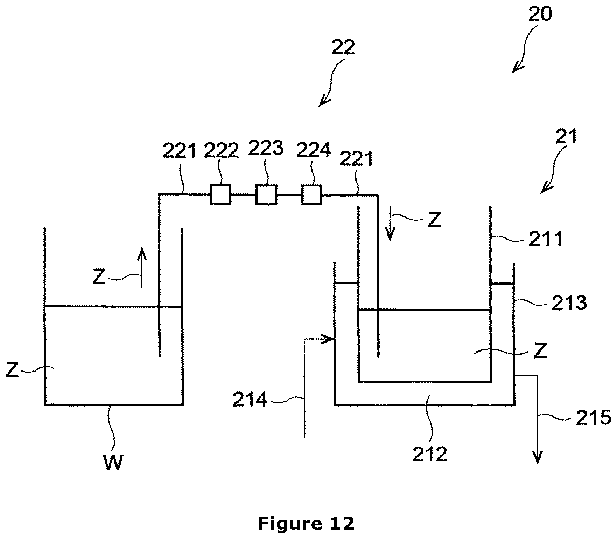

Hereinafter, the gel producing section 20 is described based on Figures 11 and 12. Figure 11 is a schematic view of a configuration of the gel producing apparatus 2, and Figure 12 is a schematic view illustrating configurations of a heating section 21 and a sol feeding section 22 included in the gel producing section 20. Each dashed line in Figure 11 indicates a conveying direction of a sol. Each arrow in Figure 12 indicates a flowing direction of a sol.

The gel producing section 20 includes a heating section 21 that heats a sol produced by the sol producing section 10, to a gelation temperature.

The gelation temperature is preferably 20°C or more and 60°C or less, more preferably 25°C or more and 40°C or less, from the viewpoint of allowing macropores having desired pore sizes to be properly formed. The heating time at the gelation temperature is preferably 4 hours or more and 24 hours or less.

The heating section 21 includes a gel forming container 211 that contains a sol Z, a heating medium 212 that is in contact with the gel forming container 211, and a heating tank 213 that contains the heating medium 212.

The heating section 21 heats the sol Z contained in the gel forming container 211, to a gelation temperature by the heating medium 212.

The heating medium 212 is, for example, a liquid such as hot water. The heating medium 212 may be gaseous. The heating medium 212 is in contact with an outer surface of the gel forming container 211 to thereby heat the sol Z in the gel forming container 211.

The heating section 21 may include a heating medium-feeding section 214 that feeds the heating medium 212 to the heating tank 213, and a heating medium-discharging section 215 that discharges the heating medium 212 from the heating tank 213.

A mold for shaping a gel into a desired shape may be included in the gel forming container 211. Examples of the material of the mold include synthetic resins such as polystyrene, polyethylene, polypropylene, polyethylene terephthalate (PET), polycarbonate (PC), silicone and polytetrafluoroethylene (PTFE), and metals such as aluminum and stainless steel.

The gel producing section 20 may include a sol feeding section 22 that feeds a sol Z produced by the sol producing section 10 and contained in a container W (for example, a recovering container 17, a first container V1, a second container V2, ... , or an n-th container Vn), to the gel forming container 211.

The sol feeding section 22 includes a sol feeding pipe 221 that feeds the sol Z contained in the container W (for example, the recovering container 17, the first container V1, the second container V2, ... , or the n-th container Vn), to the gel forming container 211, and a pump 222 provided in the sol feeding pipe 221. The sol feeding section 22 feeds the sol Z contained in the container W, through the sol feeding pipe 221 to the gel forming container 211 by use of suction force and ejection force of the pump 222.

The feeding pipe 221 may be provided with a flow meter 223 that detects the flow rate of the sol Z flowing through the feeding pipe 221.

The feeding pipe 221 may be provided with a flow regulator 224 that regulates the flow rate of the sol Z flowing through the feeding pipe 221. The flow regulator 224 is, for example, a valve. The flow regulator 224 may regulate the flow rate of the sol Z flowing through the feeding pipe 221, based on the flow rate of the sol Z, detected by the flow meter 223.

The gel producing section 20 may include a drying section that dries a wet gel produced in the heating section 21. The drying section dries the wet gel by, for example, natural drying, drying by heating, drying with a solvent having low surface tension, drying by freezing and sublimation, or supercritical drying. The wet gel is dried to thereby provide a dry gel.

### <<Gel producing method>>

Hereinafter, a gel producing method performed by the gel producing apparatus 2 is described.

The gel producing method includes the following steps of:
(2A) producing a sol by the sol producing method including steps 1A to 1D; and
(2B) heating the sol produced in step 2A to a gelation temperature, to thereby produce a gel.

Step 2A is performed by the sol producing section 10, and step 2B is performed by the gel producing section 20. Operations of the sol producing section 10 and the gel producing section 20 are controlled by the controlling section C2. In other words, the controlling section C2 allows the sol producing section 10 and the gel producing section 20 to perform steps 2A and 2B.

### <Step 2A>

Step 2A is a step of producing a sol by the sol producing method including steps 1A to 1D. The above description about the sol producing method including steps 1Ato 1D also applies to step 2A.

### <Step 2B>

Step 2B is a step of heating the sol produced in step 2A to a gelation temperature, to thereby produce a gel. In step 2B, a hydrolysis reaction and a polycondensation reaction further progress to thereby form a polysiloxane polymer, and sol-gel transition with a phase separation process (typically spinodal decomposition) is induced to thereby produce a polysiloxane gel (wet gel). The polysiloxane gel produced has a co-continuous structure of a skeleton phase and a solvent phase. The skeleton phase is rich in the siloxane polymer generated by the hydrolysis reaction and the polycondensation reaction, and the solvent phase is rich in the solvent. The skeleton phase and the solvent phase each have a continuous three-dimensional network structure, and intertangle with each other to thereby form a co-continuous structure of the skeleton phase and the solvent phase.

A mold for shaping a gel into a desired shape may be, if necessary, added to the sol produced in step 2A.

Step 2B is performed by, for example, the heating section 21. The heating section 21 heats, for example, the sol Z contained in the gel forming container 211, to a gelation temperature by the heating medium 212.

The gelation temperature is preferably 20°C or more and 60°C or less, more preferably 25°C or more and 40°C or less, from the viewpoint of allowing macropores having desired pore sizes to be properly formed. The heating time at the gelation temperature is preferably 4 hours or more and 24 hours or less.

A step of feeding the sol produced in step 2A and contained in a container W (for example, a recovering container 17, a first container V1, a second container V2, ... , or an n-th container Vn), to the gel forming container 211, may be performed after step 2A and before step 2B. This step can be performed by the sol feeding section 22.

The gel producing method including steps 2A and 2B can allow solation of the mixed liquid M to progress under sufficiently controlled conditions with the mixed liquid M being effectively cooled by the cooling medium 152 in the cooling section 15, thereby industrially producing a homogeneous sol. In addition, the method can allow sol-gel transition with a phase separation process to be induced by use of the sol thus obtained, thereby producing a gel having a co-continuous structure of a skeleton phase and a solvent phase and producing a silica porous body having macropores. Accordingly, the gel produced by the gel producing method including steps 2A and 2B is useful as a gel for use in production of a silica porous body having macropores.

The gel (wet gel) produced by the gel producing method including steps 2A and 2B has a co-continuous structure of a skeleton phase and a solvent phase. The skeleton phase is rich in the siloxane polymer generated by the hydrolysis reaction and the polycondensation reaction, and the solvent phase is rich in the solvent. The skeleton phase and the solvent phase each have a continuous three-dimensional network structure, and intertangle with each other to thereby form a co-continuous structure of the skeleton phase and the solvent phase.

The wet gel produced in step 2B may be dried to thereby provide a dry gel. Examples of the drying include natural drying, drying by heating, drying with a solvent having low surface tension, drying by freezing and sublimation, and supercritical drying.

### <<Silica porous body producing apparatus>>

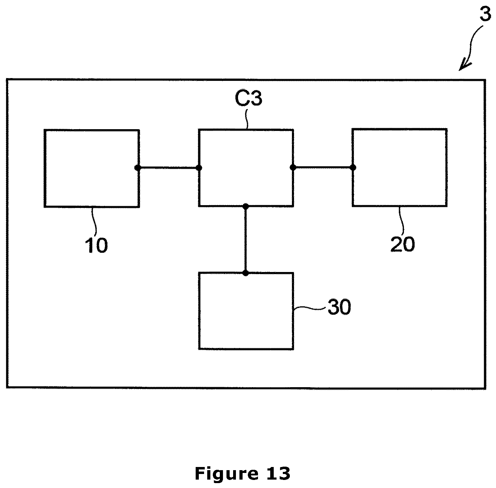

Hereinafter, a silica porous body producing apparatus 3 according to one embodiment of the present invention is described based on Figure 13. Figure 13 is a schematic view illustrating a configuration of the silica porous body producing apparatus 3.

The silica porous body producing apparatus 3 includes a sol producing section 10, a gel producing section 20, a silica porous body producing section 30, and a controlling section C3 that controls operations of the sol producing section 10, the gel producing section 20 and the silica porous body producing section 30. Various kinds of processing to be performed by the sol producing section 10 are as described above. Various kinds of processing to be performed by the gel producing section 20 are as described above.

The silica porous body producing section 30 performs various kinds of processing for producing a silica porous body. Such various kinds of processing to be performed by the silica porous body producing section 30 are described below.

A configuration of the controlling section C3 is the same as in the controlling section C1. The controlling section C3 is, for example, a computer, and controls operations of the sol producing section 10, the gel producing section 20 and the silica porous body producing section 30. A memorizing section of the controlling section C3 memorizes a program, data, and the like for control of processing executed in the sol producing section 10, the gel producing section 20 and the silica porous body producing section 30, as is the same in the controlling section C1. The above description about a memorizing medium readable by such program and computer can also apply to the controlling section C3. For example, a program is recorded in a recording medium, in which the program, when executed by a computer for controlling an operation of the silica porous body producing apparatus 3, allows the computer to control the silica porous body producing apparatus 3 so that a silica porous body producing method described below is performed.

### <<Sol producing section>>

The above description about the sol producing section 10 in the sol producing apparatus 1 also applies to the sol producing section 10 in the silica porous body producing apparatus 3.

### <<Gel producing section>>

The above description about the gel producing section 20 in the gel producing apparatus 2 also applies to the gel producing section 20 in the silica porous body producing apparatus 3.

### <<Silica porous body producing section>>

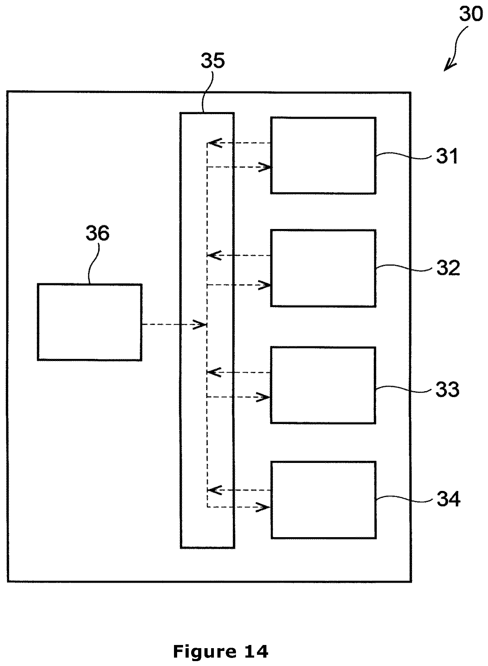

Hereinafter, the silica porous body producing section 30 is described based on Figure 14. Figure 14 is a schematic view illustrating a configuration of the silica porous body producing section 30. Each dashed line in Figure 14 indicates a conveying direction of a gel or a silica porous body.

The silica porous body producing section 30 includes a firing section 31 that fires the gel produced by the gel producing section 20 to thereby produce a silica porous body.

The firing section 31 may fire a gel treated in a heating and refluxing section 32, a gel treated in a washing section 33 or a gel treated in a drying section 34, to thereby produce a silica porous body.

The firing temperature in the firing section 31 is, for example, 500°C or more and 1000°C or less, and the firing time in the firing section 31 is preferably 1 hour or more and 8 hours or less. The firing by the firing section 31 is usually performed under an air atmosphere.

The silica porous body producing section 30 may include a heating and refluxing section 32 that allows the gel produced by the gel producing section 20 and a mesopore forming agent to react under heating and reflux conditions. The gel produced by the gel producing section 20 and the mesopore forming agent are allowed to react under heating and reflux conditions, to thereby form pores (pores serving as mesopores in a silica porous body) in a gel skeleton. The mesopore forming agent may be contained in the gel produced by the gel producing section 20, may be contained in an aqueous medium (for example, water) to be heated and refluxed, or may be contained in both the gel and the medium.

In the heating and refluxing section 32, the heating temperature is, for example, 50°C or more and 120°C or less and the heating time is, for example, 1 hour or more and 36 hours or less.

The silica porous body producing section 30 may include a washing section 33 that washes the gel treated in the heating and refluxing section 32.

The washing section 33 washes the gel by, for example, immersing the gel in a washing liquid or allowing a washing liquid to flow in a column containing the gel.

Examples of the washing liquid include water, an organic solvent, a mixed solvent of water and an organic solvent, and an aqueous solution containing an acid or a base. Examples of the organic solvent include alcohols such as methyl alcohol, ethyl alcohol, n-propanol, 2-propanol (IPA) and butanol. Examples of the acid include hydrochloric acid, sulfuric acid, nitric acid, hydrofluoric acid, acetic acid, formic acid, carbonic acid, citric acid, and phosphoric acid. Examples of the base include sodium hydroxide, potassium hydroxide, ammonia, water-soluble amine, sodium carbonate, and sodium hydrogen carbonate.

The silica porous body producing section 30 may include a drying section 34 that dries a gel washed by the washing section 33.

The drying section 34 dries the gel by, for example, natural drying, drying by heating, drying with a solvent having low surface tension, drying by freezing and sublimation, or supercritical drying.

The silica porous body producing section 30 may include a conveying section 35 that performs, for example, carrying of the gel into the firing section 31, carrying of the silica porous body out of the firing section 31, carrying of the gel into and out of the heating and refluxing section 32, carrying of the gel into and out of the washing section 33, and carrying of the gel into and out of the drying section 34.

The silica porous body producing section 30 may include, for example, a gel feeding section 36 that feeds the gel produced by the gel producing section 20, to the conveying section 35.

### <<Silica porous body producing method>>

Hereinafter, a silica porous body producing method performed by the silica porous body producing apparatus 3 is described.

The silica porous body producing method includes the following steps of:
(3A) producing a sol by the sol producing method including steps 1A to 1D;
(3B) heating the sol produced in step 3A to a gelation temperature, to thereby produce a gel; and
(3C) firing the gel produced in step 3B, to thereby produce a silica porous body.

### <Step 3A>

Step 3A is a step of producing a sol by the sol producing method including steps 1Ato 1D.

The above description about the sol producing method including steps 1A to 1D also applies to step 3A.

### <Step 3B>

Step 3B is a step of heating the sol produced in step 3A to a gelation temperature, to thereby produce a gel.

The description about step 2B of the gel producing method also applies to step 3B.

### <Step 3C>

Step 3C is a step of firing the gel produced in step 3B, to thereby produce a silica porous body.

Step 3C can be performed by the firing section 31.

In step 3C, the firing temperature is preferably 500°C or more and 1000°C or less, and the firing time is preferably 1 hour or more and 8 hours or less. The firing is usually performed under an air atmosphere.

A step (hereinafter, referred to as "heating and refluxing step") of allowing the gel produced in step 3B and a mesopore forming agent to react under heating and reflux conditions may be performed after step 3B and before step 3C. The heating and refluxing step can be performed by the heating and refluxing section 32. The gel produced in step 3B and the mesopore forming agent are allowed to react under heating and reflux conditions, to thereby form pores (pores serving as mesopores in a silica porous body) in a gel skeleton. The mesopore forming agent may be contained in the gel produced in step 3B, may be contained in an aqueous medium (for example, water) to be heated and refluxed, or may be contained in both the gel and the medium.

In the heating and refluxing step, the heating temperature is, for example, 50°C or more and 120°C or less, and the heating time is, for example, 1 hour or more and 36 hours or less.

A step (hereinafter, referred to as "washing step") of washing the gel treated in the heating and refluxing step may be performed after the heating and refluxing step and before step 3C. The washing step can be performed by the washing section 33.

A step (hereinafter, referred to as "drying step") of drying the gel washed in the washing step may be performed after the washing step and before step 3C. The drying step can be performed by the drying section 34.

In step 3C, the gel treated in the heating and refluxing step, the gel treated in the washing step or the gel treated in the drying step may be fired to thereby produce a silica porous body.

The silica porous body (silica monolith) has a co-continuous structure of a skeleton composed of silica, and macropores. The gel is fired to thereby form a silica skeleton of the silica porous body, from the skeleton phase of the gel, and form macropores of the silica porous body, from the solvent phase of the gel. The silica porous body may have mesopores formed in the silica skeleton.

The silica skeleton and macropores in the silica porous body each have a continuous three-dimensional network structure, and intertangle with each other to thereby form a co-continuous structure of the silica skeleton and macropores. Such a co-continuous structure of the silica skeleton and macropores of the silica porous body can be confirmed by observation of a surface or a cross section of the silica porous body with a scanning electron microscope (SEM).

The most frequent pore diameter of macropores is preferably 80 nm or more and 7000 nm or less, more preferably 80 nm or more and 5000 nm or less, from the viewpoint that strength of the co-continuous structure is maintained. The method for measuring the most frequent pore diameter of macropores is as described in Examples.

The most frequent pore diameter of mesopores is preferably 2 nm or more and 50 nm or less, more preferably 5 nm or more and 30 nm or less, from the viewpoint of an increase in specific surface area. The method for measuring the most frequent pore diameter of mesopores is as described in Examples.

The silica porous body preferably has a specific surface area of 100 m²/g or more and 1000 m²/g or less, more preferably 100 m²/g or more and 800 m²/g or less, from the viewpoint of an enhancement in performance of the silica porous body as an adsorbent or a catalyst. The method for measuring the specific surface area is as described in Examples.

A silica porous body produced according to the present invention can be suitably used as an adsorbent for adsorption of a gas (for example, vapor of an organic solvent such as alcohol or ether, SO₂, H₂O, or CO₂) or for adsorption of an object substance (for example, a metal and/or a metal ion) from a liquid containing the object substance, or as, for example, a catalyst carrier, an enzyme carrier, or a column for chromatography separation.

### EXAMPLES

Hereinafter, the present invention is further specifically described with reference to Examples, but the present invention is not limited to these Examples at all.

### <Example 1>

### (1) Preparation of sol

A sol was prepared by use of the sol producing apparatus 1 including the sol producing section 10A as illustrated in Figure 2. The stock liquid L1 fed from the first feeding section 12, here used, was tetramethoxysilane. The stock liquid L1 was continuously fed to the mixing section 11 at a flow rate of 5 mL/min. The stock liquid L2 fed from the second feeding section 13, here used, was an aqueous solution prepared by dissolving 405 g of polyethylene glycol 10000 (manufactured by Sigma-Aldrich Co. LLC) as a macropore forming agent, 405 g of urea as a mesopore forming agent, and 2.7 g of acetic acid as a catalyst in ion-exchange water so that the weight of the solution was 4500 g. The stock liquid L2 was continuously fed to the mixing section 11 at a flow rate of 10 mL/min. A stainless pipe (outer diameter 1/8 inches, inner diameter 1.01 mm) was used as the discharging pipe 14. A static mixer (T3-12-2-PT manufactured by Noritake Co., Ltd.) was used as the mixer 112. Cooling water was used as the cooling medium 152. The temperature of cooling water contained in the cooling tank 151 was set at 2°C. A portion of the stainless pipe, the portion being immersed in the cooling water in the cooling tank 151, had a length of 2300 mm. The temperature of the mixed liquid M immediately after cooling by the cooling water was measured with the thermometer 16. Hereinafter, the temperature of the mixed liquid M immediately after cooling by the cooling water is referred to as "the temperature of the mixed liquid after cooling".

### (2) Preparation of gel

150 mL of a sol discharged through the discharging pipe 14 was recovered in the recovering container 17 with stirring, and further stirred at room temperature for 3 minutes, and thereafter a mold for shaping was loaded into the recovering container 17. Thereafter, the resultant was left to still stand at 30°C for 19 hours, and a polysiloxane gel was thus prepared.

### (3) Production of silica monolith

The obtained polysiloxane gel was added to a reaction container where 100 mL of 1.5 M urea water was placed, and heated and refluxed at 90°C for 5 hours. After completion of the refluxing, the obtained polysiloxane gel was washed with water, and dried in a drier set at 60°C, for 20 hours. After the drying, the gel was fired at 600°C for 5 hours under an air atmosphere, and a silica monolith was thus produced.

### (4) Observation with scanning electron microscope

A surface structure of a silica monolith sample was observed with a scanning electron microscope (SEM) (XL30SFEG manufactured by FEI Company Japan Ltd.). In SEM observation, three images were taken at any positions. A case where formation of a continuous network structure was observed in all the three images was evaluated as "A". A case where formation of a continuous network structure was not observed in any one or more of the three images was evaluated as "B".

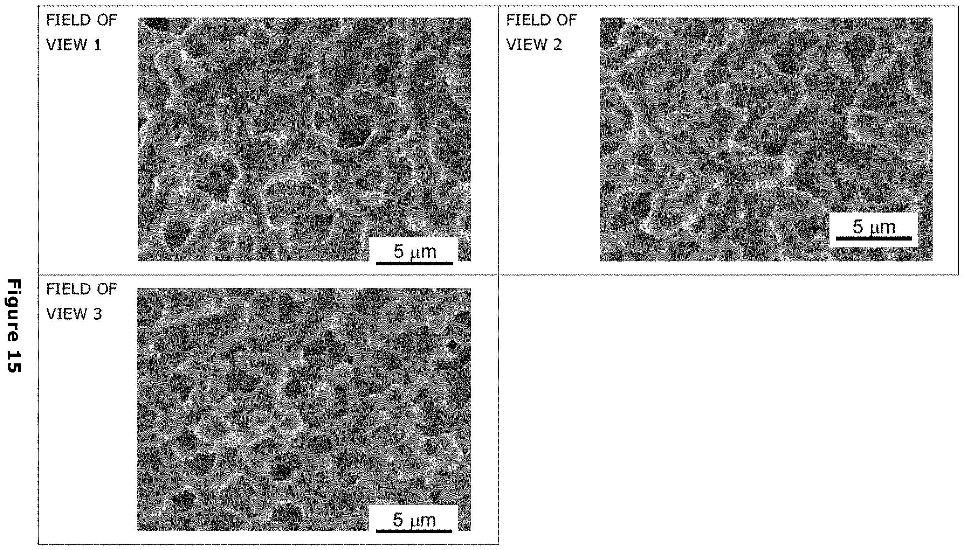

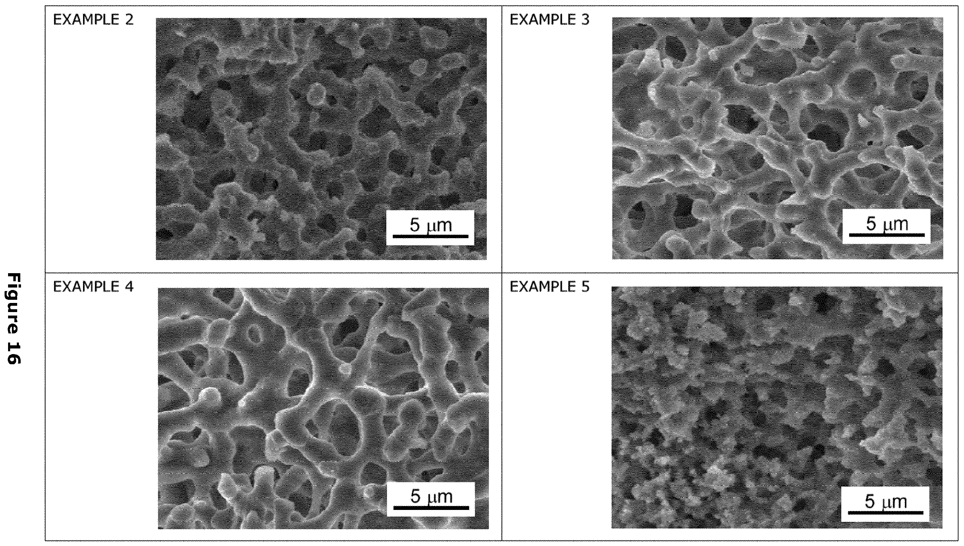

The three images in Example 1 are represented in Figure 15, and one of such images in Examples 2 to 5 is represented in Figure 16.

### (5) Measurement of specific surface area and most frequent pore diameter of mesopores

The specific surface area and the most frequent pore diameter of mesopores were measured with a specific surface area/pore distribution measuring apparatus "BELSORP-miniX" manufactured by MicrotracBEL Corp. The amounts of absorption and desorption of nitrogen with liquid nitrogen at a temperature of 77 K, by a silica monolith sample subjected to degassing under reduced pressure at 400°C for 3 hours, were measured by a multipoint method, to thereby determine an adsorption-desorption isotherm, and the specific surface area and the most frequent pore diameter of mesopores were calculated based on the adsorption-desorption isotherm. The specific surface area was calculated by the BET method, and the most frequent pore diameter of mesopores was calculated by the BJH method. The BJH method is a method for analysis of a distribution of a pore volume to a pore diameter under the assumption that pores are cylindrical according to a standard model of Barrett-Joyner-Halenda (the detail is found in, for example, J. Amer. Chem. Soc., 73, 373, 1951). In the present invention, pores having a diameter of 2 to 200 nm were analyzed.

### (6) Measurement of most frequent pore diameter of macropores

The most frequent pore diameter of macropores was measured with a mercury porosimeter ("AutoPore IV 9520" manufactured by Micromeritics Instrument Corporation) by a mercury intrusion method. In the mercury intrusion method, mercury is allowed to penetrate by application of pressure to pores of a silica monolith sample, the pore volume and the specific surface area are determined from the pressure and the amount of mercury intruded, and the pore diameter is calculated from a relationship between the pore volume and the specific surface area under the assumption that pores are cylindrical. In the present invention, pores having a diameter of 50 nm to 500 µm were analyzed in the mercury intrusion method.

The results in (4) to (6) are shown in Table 1.

### <Examples 2 to 5 and Comparative Example 1>

The same operations as in Example 1 were performed except that the temperature of the cooling water in the cooling tank 151 was changed to 5°C, 10°C, 15°C, 24°C or 35°C. In Comparative Example 1, formation of a continuous network structure was not observed with SEM, and thus confirmation of the specific surface area, the most frequent pore diameter of mesopores and the most frequent pore diameter of macropores was omitted. The results are shown in Table 1.

### [Table 1]

**Table 1**

| | Sol Preparing Conditions | | | Observation of Structure with SEM | BET Method | BJH Method | Mercury Intrusion Method |
|---|---|---|---|---|---|---|---|
| | Temperature of Cooling Water (°C) | Cooling Time by Cooling Section (sec) | Temperature of Mixed Liquid after Cooling (°C) | Co-Continuous Structure | Specific Surface Area (m²/g) | Most Frequent Pore Diameter of Mesopores (nm) | Most Frequent Pore Diameter of Macropores (nm) |
| Example 1 | 2 | 7.4 | 13 | A | 547 | 10.0 | 1271 |
| Example 2 | 5 | 7.4 | 14 | A | 566 | 10.1 | 1640 |
| Example 3 | 10 | 7.4 | 16 | A | 529 | 10.2 | 2510 |
| Example 4 | 15 | 7.4 | 19 | A | 463 | 12.1 | 1900 |
| Example 5 | 24 | 7.4 | 26 | A | 461 | 15.0 | 550 |
| Comparative Example 1 | 35 | 7.4 | 47 | B | - | - | - |

### <Examples 6 and 7>

The same operations as in Example 1 were performed except that the length of a portion of the stainless pipe, the portion being immersed in the cooling water in the cooling tank 151, was changed to 1000 mm or 4600 mm. The results are shown in Table 2.

### <Example 8>

The same operations as in Example 4 were performed except that the mixer 112 was changed to an in-line homogenizer (number of rotations: 10000 rpm, IKA Japan T-25 In-line Homogenizer). The results are shown in Table 2.

### [Table 2]

**Table 2**

| | Sol preparing conditions | | | | Observation of Structure with SEM | BET Method | BJH Method | Mercury Intrusion Method |
|---|---|---|---|---|---|---|---|---|
| | Type of Mixer | Length of Discharging Pipe Immersed in Cooling Water (mm) | Cooling Time by Cooling Section (sec) | Temperature of Mixed Liquid after Cooling (°C) | Co-Continuous Structure | Specific Surface Area (m²/g) | Most Frequent Pore Diameter of Mesopores (nm) | Most Frequent Pore Diameter of Macropores (nm) |
| Example 1 | Static Mixer | 2300 | 7.4 | 13 | A | 547 | 10.0 | 1271 |
| Example 6 | Static Mixer | 1000 | 3.2 | 11 | A | 479 | 15.0 | 227 |
| Example 7 | Static Mixer | 4600 | 14.8 | 16 | A | 492 | 17.3 | 134 |
| Example 8 | Homogenizer | 2300 | 7.4 | 7 | A | 573 | 10.0 | 487 |

### <Example 9>

The same operations as in Example 1 were performed except that the flow rate of the stock liquid L1 fed to the mixing section 11 was changed to 10 mL/min and the flow rate of the stock liquid L2 fed to the mixing section 11 was changed to 20 mL/min. The results are shown in Table 3.

### <Example 10>

The same operations as in Example 1 were performed except that the flow rate of the stock liquid L1 fed to the mixing section 11 was changed to 25 mL/min and the flow rate of the stock liquid L2 fed to the mixing section 11 was changed to 50 mL/min. The results are shown in Table 3.

### [Table 3]

**Table 3**

| | Sol Preparing Conditions | | | Observation of Structure with SEM | BET Method | BJH Method | Mercury Intrusion Method |
|---|---|---|---|---|---|---|---|
| | Total Flow Rate of Stock Liquids L1 and L2 (mL/min) | Cooling Time by Cooling Section (sec) | Temperature of Mixed Liquid after Cooling (°C) | Co-Continuous Structure | Specific Surface Area (m²/g) | Most Frequent Pore Diameter of Mesopores (nm) | Most Frequent Pore Diameter of Macropores (nm) |
| Example 1 | 15 | 7.4 | 13 | A | 547 | 10.0 | 1271 |
| Example 9 | 30 | 3.7 | 9 | A | 516 | 7.6* | 113 |
| Example 10 | 75 | 1.5 | 7 | A | 491 | 12.2 | 2500 |

| | | | | | | | |
|---|---|---|---|---|---|---|---|
| * measured with mercury porosimeter | | | | | | | |

### <Example 11>

The same operations as in Example 1 were performed except that the flow rate of the stock liquid L2 fed to the mixing section 11 was changed to 12 mL/min. The results are shown in Table 4.

### [Table 4]

**Table 4**

| | Sol Preparing Conditions | | | Observation of Structure with SEM | BET Method | BJH Method | Mercury Intrusion Method |
|---|---|---|---|---|---|---|---|
| | Flow Rate of Stock Liquid L2 (mL/min) | Cooling Time by Cooling Section (sec) | Temperature of Mixed Liquid after Cooling (°C) | Co-Conti nuous Structure | Specific Surface Area (m²/g) | Most Frequent Pore Diameter of Mesopores (nm) | Most Frequent Pore Diameter Size of Macropores (nm) |
| Example 1 | 10 | 7.4 | 13 | A | 547 | 10.0 | 1271 |
| Example 11 | 12 | 6.5 | 12 | A | 517 | 6.4 | 3500 |

### <Example 12>

Preparation of a sol, preparation of a gel, and production of a silica monolith were continuously repeated 100 times in the same manner as in Example 1. Physical property values of each dry gel before the refluxing step (a step of providing mesopores) at the 5^{th}, 10^{th}, 25^{th} and 50^{th} times are shown in Table 5.

### [Table 5]

**Table 5**

| | Flow Reaction System | | Observation of Structure with SEM | BET Method | Mercury Intrusion Method |
|---|---|---|---|---|---|
| | Total Flow Rate of Stock Liquids L1 and L2 (mL/min) | Temperature of Mixed Liquid after Cooling (°C) | Co-Continuous Structure | Specific Surface Area (m²/g) | Most Frequent Pore Diameter of Macropores (nm) |
| 1^{st} time | 15 | 12 | A | 681 | 2928 |
| 5^{th} time | 15 | 12 | A | 676 | 2086 |
| 10^{th} time | 15 | 12 | A | 675 | 1879 |
| 25^{th} time | 15 | 11 | A | 698 | 2091 |
| 50^{th} time | 15 | 12 | A | 698 | 1618 |

### <Example 13>

The stirring section 18 and the cooling section 19 as illustrated in Figure 7 were adopted in the sol producing apparatus 1 including the sol producing section 10A as illustrated in Figure 2, and a sol was prepared.

The stock liquid L1 fed from the first feeding section 12, here used, was tetramethoxysilane. The stock liquid L1 was continuously fed to the mixing section 11 at a flow rate of 45 mL/min. The stock liquid L2 fed from the second feeding section 13, here used, was an aqueous solution prepared by dissolving 405 g of polyethylene glycol (molecular weight 10000) as a macropore forming agent, 405 g of urea as a mesopore forming agent, and 2.7 g of acetic acid as a catalyst in ion-exchange water so that the weight of the solution was 4500 g. The stock liquid L2 was continuously fed to the mixing section 11 at a flow rate of 90 mL/min. A stainless pipe (outer diameter 1/8 inches, inner diameter 1.01 mm) was used as the discharging pipe 14. A static mixer (T3-12-2-PT manufactured by Noritake Co., Ltd.) was used as the mixer 112. The temperature of cooling water contained in the cooling tank 151 was set at 2°C. A portion of the stainless pipe, the portion being immersed in the cooling water in the cooling tank 151, had a length of 2300 mm.

In the stirring section 18, a sol recovered in the recovering container 17 was stirred for 22 minutes, with cooling to 15°C by the cooling section 19, and sent at a flow rate of 135 mL/min to a collection container by use of a pump. A sol collected was left to still stand in the same manner as in Example 1, and a polysiloxane gel was thus obtained.

The obtained polysiloxane gel was added to a reaction container where 8000 mL of 1.5 M urea water was placed, and heated and refluxed at 100°C for 5 hours. After completion of the refluxing, the obtained polysiloxane gel was washed with water, and dried in a drier set at 60°C, for 20 hours. After the drying, the gel was fired at 600°C for 5 hours under an air atmosphere, and a silica monolith was thus produced. The results are shown in Table 6.

### [Table 6]

**Table 6**

| | Observation of Structure with SEM | BET Method | BJH Method | Mercury Intrusion Method |
|---|---|---|---|---|
| | Co-Continuous Structure | Specific Surface Area (m²/g) | Most Frequent Pore Diameter of Mesopores (nm) | Most Frequent Pore Diameter of Macropores (nm) |
| Example 1 | A | 547 | 10.0 | 1271 |
| Example 13 | A | 301 | 26.9 | 913 |

## Claims

1. A sol producing apparatus that produces a sol for use in production of a silica porous body having macropores, the sol producing apparatus comprising:
a mixing section that prepares a mixed liquid comprising a silica precursor, a catalyst and a macropore forming agent;
a first feeding section that feeds the silica precursor to the mixing section;
a second feeding section that feeds the catalyst and the macropore forming agent in admixture with or separately from each other, to the mixing section;
a discharging pipe that discharges the mixed liquid from the mixing section; and
a cooling section that cools the mixed liquid flowing through the discharging pipe, to 35°C or less.

2. The sol producing apparatus according to claim 1, wherein:
the mixed liquid prepared in the mixing section further comprises a mesopore forming agent; and
the second feeding section feeds the mesopore forming agent, in admixture with one of or both the catalyst and the macropore forming agent or separately from the catalyst and the macropore forming agent, to the mixing section.

3. The sol producing apparatus according to claim 1 or 2, wherein:
the cooling section comprises a cooling medium; and
a portion of the discharging pipe, the portion being in contact with the cooling medium, has an inner diameter of 0.5 mm or more and 200 mm or less and has a length of 50 mm or more and 10000 mm or less.

4. The sol producing apparatus according to any one of claims 1 to 3, wherein the cooling section cools the mixed liquid flowing through the discharging pipe, for 3 seconds or more.

5. The sol producing apparatus according to any one of claims 1 to 4, further comprising: a recovering container that recovers the mixed liquid discharged through the discharging pipe; and a stirring section that stirs the mixed liquid recovered in the recovering container.

6. A gel producing apparatus that produces a gel for use in production of a silica porous body having macropores, the gel producing apparatus comprising a sol producing section and a gel producing section, wherein:
the sol producing section comprises:
a mixing section that prepares a mixed liquid comprising a silica precursor, a catalyst and a macropore forming agent;
a first feeding section that feeds the silica precursor to the mixing section;
a second feeding section that feeds the catalyst and the macropore forming agent in admixture with or separately from each other, to the mixing section;
a discharging pipe that discharges the mixed liquid from the mixing section; and
a cooling section that cools the mixed liquid flowing through the discharging pipe, to 35°C or less; and
the gel producing section comprises a heating section that heats a sol produced in the sol producing section, to a gelation temperature.

7. A silica porous body producing apparatus that produces a silica porous body having macropores, the silica porous body producing apparatus comprising a sol producing section, a gel producing section, and a silica porous body producing section, wherein:
the sol producing section comprises:
a mixing section that prepares a mixed liquid comprising a silica precursor, a catalyst and a macropore forming agent;
a first feeding section that feeds the silica precursor to the mixing section;
a second feeding section that feeds the catalyst and the macropore forming agent in admixture with or separately from each other, to the mixing section;
a discharging pipe that discharges the mixed liquid from the mixing section; and
a cooling section that cools the mixed liquid flowing through the discharging pipe, to 35°C or less;
the gel producing section comprises a heating section that heats a sol produced in the sol producing section, to a gelation temperature; and
the silica porous body producing section comprises a firing section that fires a gel produced in the gel producing section.

8. A method for producing a sol for use in production of a silica porous body having macropores, the method comprising the following steps of:
(1A) feeding a silica precursor to a mixing section;
(1B) feeding a catalyst and a macropore forming agent in admixture with or separately from each other, to the mixing section;
(1C) preparing a mixed liquid comprising the silica precursor, the catalyst and the macropore forming agent, in the mixing section; and
(1D) cooling the mixed liquid flowing through a discharging pipe connected to the mixing section, to 35°C or less, with the mixed liquid being discharged from the mixing section through the discharging pipe.

9. The method according to claim 8, wherein:
the mixed liquid prepared in step 1C further comprises a mesopore forming agent; and
in step 1B, the mesopore forming agent is fed in admixture with one of or both the catalyst and the macropore forming agent or separately from the catalyst and the macropore forming agent, to the mixing section.

10. The method according to claim 8 or 9, wherein:
in step 1D, the mixed liquid flowing through the discharging pipe is cooled by a cooling medium; and
a portion of the discharging pipe, the portion being in contact with the cooling medium, has an inner diameter of 0.5 mm or more and 200 mm or less and has a length of 50 mm or more and 10000 mm or less.

11. The method according to any one of claims 8 to 10, wherein in step 1D, the mixed liquid flowing through the discharging pipe is cooled for 3 seconds or more.

12. The method according to any one of claims 8 to 11, further comprising the following step of
(1E) recovering and stirring the mixed liquid discharged through the discharging pipe, after step 1D.

13. A method for producing a gel for use in production of a silica porous body having macropores, the method comprising the following steps of:
(2A) producing a sol by the method according to any one of claims 8 to 12; and
(2B) heating the sol produced in step 2A to a gelation temperature, to thereby produce the gel.

14. A method for producing a silica porous body having macropores, the method comprising the following steps of:
(3A) producing a sol by the method according to any one of claims 8 to 12;
(3B) heating the sol produced in step 3A to a gelation temperature, to thereby produce a gel; and
(3C) firing the gel produced in step 3B, to thereby produce the silica porous body.
